(19) Europäisches Patentamt / European Patent Office / Office européen des brevets

(11) **EP 4 523 781 A1**

(12) **EUROPEAN PATENT APPLICATION**

(43) Date of publication:
**19.03.2025 Bulletin 2025/12**

(21) Application number: **24199788.1**

(22) Date of filing: **11.09.2024**

(51) International Patent Classification (IPC):
***B01D 69/12*** (2006.01)    ***B60H 3/02*** (2006.01)
***B01D 53/22*** (2006.01)    ***B01D 53/26*** (2006.01)
***B60H 1/00*** (2006.01)

(52) Cooperative Patent Classification (CPC):
**B01D 69/107; B01D 53/22; B01D 53/228;
B01D 53/268; B01D 61/363; B01D 63/085;
B01D 69/02; B01D 69/106; B01D 69/1213;
B60H 1/00392; B60H 3/024; F24F 6/00;
H01M 8/04119; B01D 71/26; B01D 71/36;**    (Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **12.09.2023 US 202363582020 P
18.12.2023 EP 23217710**

(71) Applicant: **W. L. Gore & Associates, Inc.
Newark, DE 19711 (US)**

(72) Inventors:
• **GIFFORD, Robert
  Newark (US)**
• **BEUSCHER, Uwe
  Newark (US)**
• **CRESSWELL, Kevin
  Newark (US)**

(74) Representative: **HGF
HGF Limited
1 City Walk
Leeds LS11 9DX (GB)**

(54)    **GAS SEPARATION SYSTEMS AND METHODS**

(57)    Disclosed are systems for and methods of gas separation using selective permeability, including dehumidification. Envelopes and membranous partitions for use in such systems and methods are also disclosed. A dehumidifying system for a vehicle is further disclosed having a membrane separation unit. The membrane separation unit has a membranous partition (30), with a selectively permeable membrane. Cabin air is supplied along ducting from the vehicle cabin to a feed gas inlet on one side of the membrane; and retentate air is recirculated to the vehicle cabin. Outside air is supplied to the other side of the membrane, or a vacuum is applied.

Fig. 25

(52) Cooperative Patent Classification (CPC): (Cont.)
B01D 71/381; B01D 71/54; B01D 71/70;
B01D 2257/104; B01D 2257/504; B01D 2311/13;
B01D 2315/22; B01D 2323/66; B01D 2325/02;
B01D 2325/04; B01D 2325/20

Description

## Field of the Invention

The invention relates to dehumidification systems and methods, in particular for use in vehicle and building HVAC systems.

## Background to the Invention

Cabin ventilation systems of motor vehicles conventionally include a fan-driven air circulation system in which vehicle cabin air is circulated by a fan. Ventilation systems typically additionally include means for regulating air temperature. Such systems are known variously as climate control systems or "HVAC" systems (standing for heating, ventilation and air conditioning systems). HVAC systems are also used for climate control in buildings.

Air cooling is typically provided by an air conditioning unit (a/c unit), which additionally acts to remove moisture from the air by condensation on the evaporator of the a/c unit. Waste heat generated by the internal combustion engine is normally used to raise the temperature of air flowing into the cabin of a vehicle.

Even where air is regulated to at or above ambient temperature, it is desirable to also regulate air humidity, reduce moisture build up, condensation on windows and so forth, that might otherwise occur. In some vehicles or buildings equipped with an HVAC system, the a/c unit runs at all times to dehumidify the air

Since a vehicle a/c unit draws power from the vehicle engine or battery, continuous use of an a/c unit to dehumidify air can reduce vehicle efficiency. Analogous considerations apply to HVAC systems in other contexts, such as buildings, aircraft etc. For example, removing moisture in buildings will reduce the load on the condenser unit for cooling, which leads to a more energy efficient HVAC system.

For electric vehicles (hereinafter referred to as EVs), engine waste heat is not available and cabin air must be instead heated electrically, powered by the vehicle battery. Similarly, EV a/c units are electrically powered. Where an a/c unit is used primarily as a dehumidifier and cabin air must be electrically heated to compensate for the unwanted cooling provided by the a/c unit, an HVAC system of this type can undesirably drain the EVs battery and compromise available range, particularly when ambient temperature is low.

Energy consumption can be reduced to some degree by increasing the proportion of cabin air that is recirculated. However, vehicle occupants generate moisture and therefore cabin air recirculation increases the rate of moisture that must be removed.

Moreover, at very low temperatures, such conventional vehicle HVAC systems become less effective, due to the risk of freezing of condensed air or the boiling point of the coolant in the a/c circuit. In low temperature conditions, however, the requirement to dehumidify cabin air is greater, due to the increased risk of condensation on the cabin facing surfaces of vehicle windows.

It has been proposed, for example in JP2022076664A (Nissan Motor Company and Renault SAS) to use membrane dehumidification where air cooling is not required. A membrane dehumidification system employs a water vapour partial pressure differential across an air-impermeable water vapour-permeable membrane and are more commonly found in building HVAC systems.

The water vapour partial pressure across an air-impermeable water vapour-permeable membrane can be generated by an absolute air pressure differential across the membrane, generated by pressurising air to one side of the membrane and/or applying a vacuum to one side of the membrane. Alternatively, or in addition, a proportion of the dried air can be supplied to one side of the membrane. While in some operating conditions membrane dehumidification can offer some energy efficiencies in comparison to conventional vehicle HVAC systems, the benefits can be compromised by the energy cost to create the required water vapour partial pressure and their uptake for vehicle applications (including road transport vehicles, boats or the like) and buildings has been limited.

An additional challenge of known membrane dehumidifiers is the requirement for a relatively large exposed membrane surface area, and commensurately large moisture exchange units to house the membranes.

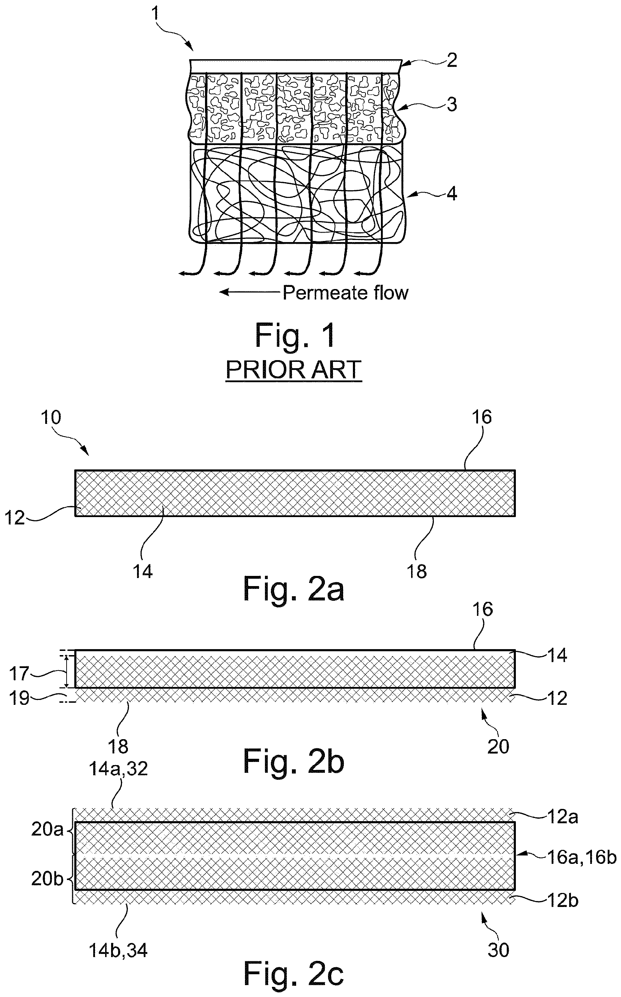

As shown in Fig. 1, a known arrangement 1 for use in membrane dehumidification is formed as a thin film membrane. A thin film 2 (typically 0.1-5 microns) of a selectively permeable polymer is provided, such as a silicone, polyimide or polyurethane, normally on a microporous support 3 (typically of a porous polysulfone (PS) or polyethersulfone (PES) material, or the like), itself around 50 microns in thickness. In use, the membrane is housed within an enclosure or envelope and defines a partition between the high and low water vapour partial pressure sides of the membrane. The mesh provides an air pathway to one side of the membrane and, to provide protection from mechanical damage from the mesh, an additional non-woven layer 4 of glass or ceramic fibre, nonwoven fabric (such as a polypropylene (PP) or polyethylene (PE) non-woven) or the like, of around 100-200 microns is disposed between the mesh and the film 2 and microporous support 3.

The non-woven layer and, where present, microporous support, create a diffusion barrier to the membrane, reducing efficiency and decreasing the water vapour partial pressure differential and/or increasing the membrane surface area required to achieve a given dehumidification rate.

Accordingly, there remains a need for improved dehumidification of vehicle cabin air and for improvements in membrane dehumidification in HVAC systems.

Summary of the Invention

In a first aspect, the invention relates to an envelope for use in gas separation, comprising:

a housing;
a selectively permeable membranous partition;

the selectively permeable membranous partition having a first face and an opposite second face and is sealed within the housing around a periphery of the membranous partition; and wherein the membranous partition comprises a porous polymer membrane and a selectively permeable material;
the housing defining, at least in part, a first flow pathway in gas communication with the first face of the membranous partition and a second flow pathway in gas communication with the second face of the membranous partition;

and
a support arrangement directly against the first face or the second face of the membranous partition, and configured to mechanically support the membranous partition and define at least a part of the respective first or second flow pathway.

The porous polymer membrane can withstand forces applied between the membranous partition in use (for example resulting from a pressure differential between the first and second sides, as discussed below) such that an intervening protective layer, such as a non-woven layer, is not required. The support arrangement being directly against the membranous partition eliminates the restriction to diffusion of gaseous species to and away the surface of the membranous partition that might otherwise result from an intervening protective layer. Accordingly, the envelope does not include any such intervening protective layer between the support arrangement and the membranous partition, such as a non-woven layer. The absence of a non-woven layer additionally facilitates sealing around the periphery of the membranous partition.

The term "directly against" herein includes physical contact between the membranous partition and the support arrangement, and bonding between the membranous partition and the support arrangement by adhesive.

The support arrangement may be bonded to the membranous partition. Bonding may be via an adhesive, such as a pressure sensitive or contact adhesive. The support arrangement may be mechanically bonded to the membranous partition, for example by application of heat and/or pressure.

The support arrangement may comprise a mesh. The mesh may be a metallic mesh, made from metal filaments such as steel, titanium or the like. The mesh may be a plastics mesh. The plastics material may be a polymeric material such as a polybutyl terphalate (PBT), or other plastics materials can be used, such as PP, polyethylene terephthalate (PET) or nylon. The support arrangement may comprise a lattice, moulded or cut from a sheet of plastics material.

The support arrangement may comprise a shaped support structure, having a plurality of support formations and a plurality of recessed formations. The recessed formations may for example define a plurality of channels between the support formations. The shaped support structure thereby defines at least that portion of the second flow pathway extending between the support portion and the second face. It will be understood that the support formations will typically be co-planar, so as to support the membranous partition in a flat configuration.

The support structure may be advantageously molded or machined or printed so as to reduce the forces applied between the support structure and the membranous partition.

In some embodiments, the support formations may comprise a plurality of elongate ribs, and the recessed formations comprise elongate channels between the ribs. The invention is not limited to any particular shape or configuration or dimension of support structure, however, the channels may in some embodiments be approximately 0.5 mm - 3 mm deep, or 0.5 mm - 2.5 mm deep, or 0.5 mm - 2.0 mm deep, or 0.5 mm - 1.5 mm deep, or around 0.75 mm deep or around 1 mm, or around 2 mm deep. The channels may in some embodiments have a width of around 0.5 mm - 4 mm, around 1 mm - 3 mm, or around 1 mm, 2 mm, or 3 mm in width. Each rib may be around 0.25 mm - 1 mm wide, or around 0.25 mm, around 0.5 mm or around 0.75 mm wide.

Channel or support formations may be different for different applications. For example HVAC systems may in some circumstances benefit from compact envelopes as above, or in other circumstances volume may be a less important factor. In building HVAC systems for example, it may be most efficient to minimise pressure drop across a membranous partition, leading to larger envelopes and channels around (for example) an order of magnitude larger, e.g. in the range of 10 mm - 20 mm in depth.

Each rib may have a flattened supporting face (which in use contacts the membranous partition) transitioning smoothly to lateral sides of the channels. Each channel may have a flattened base, optionally transitioning smoothly to the lateral sides of the channels. Alternatively, each channel may have a curved base, transitioning smoothly from the lateral sides.

The supporting structure may comprise a plurality of protrusions. Each protrusion may have a flattened supporting face transitioning smoothly to lateral faces of channels or flow pathways therebetween.

The supporting structure may be corrugated, wherein the corrugations define said ribs and channels. A corrugated structure may define ribs and channels on both faces thereof. i.e. The ribs on one face of a corrugated structure may be aligned with channels on the other face.

The skilled person will understand that various configurations, patterns, arrays, shapes or geometries of ribs and/or protrusions may be provided without departing from the scope of the invention disclosed herein.

Advantageously, a support structure may provide for unobstructed and typically elongate channels or flow pathways, which provides for gas to effectively flow across a membranous partition surface.

The open area of the membranous partition, i.e. the area of the membranous partition not contacting the support formations, may be above around 50% of the total area of the second face (and/or first face in embodiments having a support arrangement against the first face, as disclosed herein). The open area of the membranous partition may be above around 60%, or 70%, 75% or 80%. The open area of the membranous partition may be between around 50-95%, 50-95%, or 70-95%. The open area of the membranous partition may in some embodiments be around 80%, or around 85%, or around 87%.

The support structure may be mounted to or bonded to the housing.

The support arrangement may for example extend from an inner wall of the housing.

In some embodiments, the housing defines the support arrangement. The support structure may for example be machined from or co-moulded with the housing.

The housing may comprise a frame having a perimeter portion and a wall portion, together defining a recess. The membranous partition may be set into or over the recess and sealed to the perimeter portion.

In some embodiments, the mesh or support arrangement (as the case may be) is mounted into the recess (and optionally coupled to the housing therein). In some embodiments, the wall portion of the recess defines the support arrangement.

The perimeter portion may define a part of the first flow pathway and/or the second flow pathway. For example, one or more first apertures or channels may extend through the perimeter portion, the first apertures or channels defining a part of the first flow pathway. One or more second channels or apertures may extend through the perimeter portion, the second apertures or channels defining a part of the second flow pathway.

As known to one skilled in the art, membrane gas separation includes contacting a first side of a membranous partition with a feed gas, and the opposite second side of the membranous partition with an environment having a lower partial pressure of one or more species to be selectively removed from the feed gas. Sometimes, the second side of the membranous partition is contacted with a purge gas. The purge gas can comprise the same or a similar composition to the feed gas, but at a lower absolute pressure - for example by applying a vacuum to the second face of the membranous partition and/or by increasing the pressure of the feed gas. Alternatively, or in addition, the purge gas may comprise a lower mol% of the one or more species to be selectively be removed from the feed gas. In some applications, the environment to the second side of the membranous partition includes only species having permeated through the membrane (i.e. "permeate"), where the lower partial pressure of the one or more species to be selectively removed from the feed gas is maintained by application of a vacuum to remove the permeate gas.

Accordingly, in use of the envelope, a proportion (for example half) of the first apertures or channels are inlets to the first flow pathway, for a feed gas; and a proportion of the first apertures or channels are outlets from the first flow pathway for a retentate gas. At least a proportion of the second apertures or channels are outlets from the second flow pathway for a permeate gas. A proportion (typically half) of the second apertures or channels are, in many embodiments, inlets to the second flow pathway for a purge gas.

In some embodiments, for example wherein a vacuum is applied to the second face of the membranous partition, the second apertures or channels are outlets, in communication with a vacuum pump.

The housing may in some embodiments be of sandwich construction, formed of first and second housing portions sandwiched together advantageously via respective first and second perimeter portions (the first and second perimeter portions together defining the perimeter portion of the housing). Sandwich construction conveniently provides for assembly and for sealing the membranous partition, by sandwiching a periphery of the membranous partition between the first and second housing portions. The membranous partition may be sealed and sandwiched between the first and second peripheral portions.

At least one said housing portion may be adapted to be sealed against a further housing portion, whereby the housing portions are stacked to form a cassette having multiple envelopes, as disclosed in further detail herein.

For some applications, such as automotive or other applications where it is important to minimise use of space and weight, an envelope is advantageously as thin as possible, such that the largest number of envelopes can occupy a given volume, and the total exposed area of membranous partitions can be maximized within an available volume. An envelope may for example have a thickness of less than about 10 mm, or less than about 8 mm, or less than about 7 mm or less than about 6 mm, or less than about 5 mm. An envelope thickness may be between around 2-10 mm, or between around 2 - 8 mm, or between around 2- 5 mm. In some embodiments an envelope has a thickness of around 3 mm, 4 mm, 5 mm, 6 mm or 7 mm.

In other applications, for example in building HVAC applications where space is not as limited, other factors such as limiting pressure drop may be more important, for overall efficiency. This can lead to larger envelopes to increase overall exposed area of the membranous partition.

The support portions of the support arrangement, or the mesh or lattice as the case may be, may conveniently be coplanar with the respective first or second perimeter portion.

The envelope may comprise a first support arrangement against the first face of the membranous partition and a second support arrangement against the second face of the membranous partition. The support structures may be the same, or different from one another.

Said first and/or second channels or apertures may be defined between the first and second housing portions. For example, an aperture may be formed as an indent or cutout of the first perimeter portion, such that a channel is formed when coupled to the second perimeter portion.

Advantageously, the housing defines a plurality of first and/or second channels or apertures, preferably distributed around a periphery of the membranous partition. In this way, an even air flow to/from the respective face or faces of the membranous member is promoted.

The said housing portions may be joined by adhesive, sealant, welding (e.g. to melt a plastics material of each portion together) or any suitable method known to one skilled in the art.

The envelope may include two membranous partitions, each having a support arrangement against a second face thereof, and a shared first flow pathway therebetween, in communication with the first faces of the membranous partitions.

The membranous partitions may be separated by a spacer. The spacer may comprise a support arrangement. The spacer may be a mesh support arrangement, as disclosed herein.

The term selectively permeable means that the membranous partition has a permeability of an at least one first species through the membranous partition that is greater than the permeability of an at least one second species through the membranous partition.

The envelope may for example be used to dehumidify air, and the permeability of water vapour through the selectively permeable material and thus through the selectively permeable membranous partition may be greater than the permeability through the selectively permeable material of nitrogen and oxygen. The selectively permeable barrier may be selectively permeable for one or more alternative or additional species that might be present in air, such as VOCs, or $CO_2$.

The selectively permeable material may comprise a material selected from silicone material, a polyurethane material, an ionomer material, such as a perfluorosulfonic acid ionomer, a polyvinyl material, such as polyvinyl chloride, a polyamide material, e.g. nylon, or a polystyrene or styrene copolymer material, such as sulfonated poly(styrene-isobutylene-styrene), a polyimide material. The selectively permeable material may comprise a material selected from a siloxane material, such as polydimethylsiloxane (PDMS), cellulose acetate, a polysulfone material such as sulfonated polyethersulfone (SPES), polyethylene oxide (PEOePBT), a polyether, such as sulfonated poly(ether ether ketone), a polyalcohol such as poly(vinylalcohol)-eEDTMPA. The selectively permeable material may comprise a hydrophilic biopolymer, such as a polysaccharide or functionalised polysaccharide. An example material is chitosan (a linear polysaccharide composed of randomly distributed β--linked D-glucosamine and N-acetyl-D-glucosamine obtainable from crustaceans), however other biopolymeric materials may be used.

The selectively permeable material may comprise a material selected from a silicone material, a polyurethane material, an ionomer material, a polyvinyl material, a polyimide material. The selectively permeable material may comprise a material selected from a silicone material or a polyurethane material.

The term "membranous partition" refers to a thin sheet like structure, formed of one or more layers. A membranous partition may be flexible. The term "membrane" refers to a thin sheet of material. The membranous partition may have a thickness (between the first and second sides) of between around of 0.1 to 100 $\mu m$, or 0.1 to 50 $\mu m$, or 0.1 to 20 $\mu m$, or 0.1 to 10 $\mu m$. The membranous partition may have a thickness of around 2 $\mu m$, around 5 $\mu m$ or around 10 $\mu m$.

The membranous partition can give rise to higher rates of gas transport (i.e. mass transport rates of gas) through the barrier. For dehumidification applications in particular, there has conventionally been a upper practical limit to permeance (permeation rate of water vapour per unit area), due to condensation that can occur. The present invention provides for improved diffusion away from the second face of the membranous partition (by eliminating any intermediate layer), which allows for the use of membranous partitions having a higher GPU value. In turn this improves efficiency of dehumidification, which can be of particular benefit in some applications, such as EV ventilation or building HVAC systems.

The porous polymer membrane of the membranous partition may have a porosity of around or greater than 30%, 40%, 50%, 60%, 70%, 80% or 90%. The porosity of the porous polymer membrane may be a between around 20%-95%, or 30%-95%, or 40%-95% or 50%-95%. The porosity of the porous polymer membrane may be around 50%, 60%, 70%, 80%, 90% or 95%.

The porosity of the porous polymer membrane is a value of the bare membrane, absent the selectively permeable material or any other features of the membranous partition.

In particular applications, a combination of one or more of a comparatively thin membranous partition, a high permeance, and a high porous polymer membrane porosity (each of which are as disclosed herein) may be of particular utility.

For example, a conventional multi-layered barrier may have a permeance to water vapour of around 5000 GPU, and there are some reports of barrier in use having a permeance to water vapour of around 8000 GPU, where adequate moisture removal from the second face is available. The inventors have surprisingly found that with use of a membranous partition comprising a porous polymer membrane as disclosed herein, barriers with permeances to water vapour of around 10,000 GPU, 12,000 GPU or 15,000 GPU can be used. Comparable gas permeance values may also be achieved for membranous partitions selective for other species, such a VOCs.

The term sealed refers to a substantially gas tight seal, which may be achieved using a sealant, an adhesive, welding, a sealing member such as a gasket and/or a compression force or the like.

The porous polymer membrane may comprise any suitable polymer, for example a fluoropolymer such as polytetrafluoroethylene (PTFE) or polyvinylidene fluoride (PVDF), a polysulfone such as polyethersulfone (PES), or a thermoplastic such as polyethylene (PE, including UHMWPE), polystyrene (PS), polypropylene (PP) or the like, polyamide, polyester, polyethylene terephthalate (PET), polyparaxylylene or polyacids including polylactic acid (PLA). The porous polymer membrane may comprise PP, PTFE or PE.

A polymer membrane may be rendered porous in a number of ways, for example by phase inversion or laser processing, as known to one skilled in the art. In some preferred embodiments, the porous polymer membrane is an expanded polymer membrane.

As known to one skilled in the art, an expanded polymer membrane comprises a microstructure of nodes and fibrils and may be formed by one or more steps of uniaxially or biaxially expanding a polymer membrane or sheet, under controlled temperature, expansion rate and expansion ratio. Expanded polymer membranes are associated with good combinations of tensile strength, thickness and porosity. Moreover, and as known to the skilled person, these properties can be tuned by varying the thickness of the precursor sheet and the expansion conditions.

For example, expansion of PTFE to form ePTFE was first described in US3953566 (W. L. GORE & ASSOCIATES, INC.) and a large volume of subsequent works. Analogous expanded membranes of other polymers have been variously described for example in EP3385346 (W. L. GORE & ASSOCIATES, INC.), US 2016/032044 (W. L. GORE & ASSOCIATES, INC.), US 2005/003011 (to Sridharan et al.), by Bhullar, Sukhwinder K.. "Three decades of auxetic polymers: a review" e-Polymers, vol. 15, no. 4, 2015, pp. 205-215., or by Liu and Hu, "A review on auxetic structures and polymeric materials", Scientific Research and Essays Vol. 5 (10), pp. 1052-1063, 18 May, 2010. ; the contents of each of which are incorporated herein by reference. In some embodiments, the porous polymer membrane comprises ePP (expanded polypropylene), ePE, or ePTFE.

It has been found that the use of an expanded polymer membrane may provide for a desired combination of thickness, porosity and together with a suitable selectively permeable material, gas permeance.

The pores of the porous polymer membrane, in particular wherein the porous polymer membrane is an expanded polymer membrane, may be imbibed with the selectively permeable material.

The porous polymer membrane may be imbibed with the selectively permeable material through a part or all of the thickness of the porous polymer membrane.

Accordingly, the membranous partition may comprise a composite membrane formed of the porous polymer membrane imbibed with the selectively permeable material.

The term "imbibed" as used herein refers to the selectively permeable material filling or substantially filling the pores of the porous polymer membrane, through at least a part of the thickness of the porous polymer membrane.

Since pores of the porous polymer membrane are filled with the selectively permeable material, species must permeate through the selectively permeable material. The composite membrane thus advantageously provides a gas diffusion barrier, and inherits the selectively permeation properties of the selectively permeable material. Conversely, the porous membrane provides mechanical support to the selectively permeable material, in some embodiments (e.g. expanded membranes disclosed below) the porous membrane functions as a scaffold.

Together, the porous polymer membrane and the selectively permeable material of the composite membrane may, by virtue of the selectivity of the selectively permeable material (which may for example be on the order of $10^2$-$10^5$) substantially prevent any "convective" flow, or flow due to an absolute pressure differential, of the at least one second species. For example, in membrane dehumidification, materials having a selectivity for water vapour over nitrogen/oxygen of 20000 to 30000 are known, such that air flow through the membrane overall is low and has negligible impact on pressure differentials established between the first and second sides of the membranous partition in use.

In the plane of an imbibed composite membrane as disclosed herein may include small, microscale "defects" or voids in which pores are not filled with the selectively permeable material. Such defects may permit a small convective flow or flow resulting from an absolute pressure differential. Such "leakage" will represent less than 1% or much less than 1% (e.g. less than 0.5%, or 0.2% or 0.1 %) of the flow that would result in equivalent conditions through a bare membrane.

A porous polymer membrane, in particular expanded polymer membranes as disclosed herein, may be imbibed in any suitable manner. It is known for example to imbibe a porous membrane by wetting or coating a porous membrane with a solution or dispersion of a selectively permeable material. The solution or dispersion thereby penetrates the pores and the solvent or carrier can be removed by drying or heating to leave the selectively permeable material in situ. In use of a polymeric selectively permeable material, the solution or dispersion may include a precursor such as a monomer solution, whereby the selectively permeable material precursor is polymerised, cured or otherwise reacted to form the selectively permeable material.

In some embodiments, imbibing is achieved by placing a film or layer of the selectively permeable material against a face of the porous polymer membrane and compressing the film and membrane together, to cause the selectively permeable material to flow into the pores of the porous polymer membrane.

The membranous partition may comprise two or more than two such composite membranes.

In some embodiments, for example where the porous polymer membrane has been imbibed from one side (by applying a solution or suspension to one side of the porous polymer membrane, or by applying a film to one side of the porous polymer membrane), the composite membrane may be imbibed through a part of the thickness of the membrane and the composite membrane may comprise a coating of the selectively permeable material on one face (hereinafter referred to as the coated face), wherein the opposite face is free of the selectively permeable material (hereinafter referred to as a bare face). Herein such composite membranes are referred to as partially imbibed composite membranes.

The selectively permeable material is in many cases sticky and prone to contamination. Handling and manipulation of the membranous partition can be improved in embodiments wherein the membranous partition comprises at least two partially imbibed composite membranes, wherein first and second faces of the membranous partition are defined by bare faces of each of two partially imbibed composite membranes.

Two partially imbibed composite membranes may be bonded together via the coated faces thereof.

The envelope may form part of a stack or cassette, comprising multiple envelopes. The inlets to each of the first flow pathways of the multiple envelopes may be connectable to a common feed gas inlet. The outlets from each of the first flow pathways may be connectable to a common retentate gas outlet.

The outlets from each of the second flow pathways of the multiple envelopes may be connectable to a permeate outlet. The inlets to each of the second flow pathways may be connectable to a purge gas inlet, such as for a sweep stream, a flow of outside air or a mixture thereof; as disclosed herein.

As mentioned above, in embodiments having a sandwich structure, comprising a first housing portion and a second housing portion, the second housing portion may be adapted to be sealed against a third housing portion, whereby the housing portions form part of a stack of multiple envelopes.

That is to say, the second housing portion may be a double sided housing portion having a second perimeter portion that together with oppose faces of a wall portion, defines two recesses, on opposite faces of the second housing portion.

The first housing portion may be coupled to a first face of the second perimeter portion of the second housing, to define a first envelope.

The opposite second face of the second perimeter portion may be coupled to a third perimeter portion, to define a second envelope.

Any number of housing portions may be stacked in this manner, with the resulting stack or cassette comprising generally two types of housing portion; two end housing portions having the features of the first housing portion disclosed herein; and one or more double sided intermediate housing portions therebetween. An envelope will thereby be defined between adjacent housing portions, and a membranous partition may be sealed therebetween. In some embodiments, one or more, or each recess may comprise two membranous partitions, and a spacer or support structure therebetween.

The invention extends in a second aspect to a cassette for use in gas separation, the cassette comprising:

> two end housing portions having an end perimeter portion and an end wall portion defining a recess, the features of the first housing portion disclosed herein; and
> one or more intermediate housing portions therebetween, the or each intermediate housing portion having a intermediate perimeter portion and an intermediate wall portion, wherein the intermediate perimeter portion and a first face of the intermediate wall portion defines a first recess, and the intermediate perimeter portion and a second face of the intermediate wall portion defines a second recess;
> wherein a membranous partition is sealed between each adjacent first and/or intermediate perimeter portion;

wherein adjacent end and intermediate perimeter portions, and/or adjacent intermediate perimeter portions, together define, at least in part, a first flow pathway in gas communication with a first face of the membranous partition and a second flow pathway in gas communication with a second face of the membranous partition; and

wherein a support arrangement is positioned directly against the first face or the second face of each membranous partition, and configured to mechanically support the membranous partition and define at least a part of the respective first or second flow pathway;

wherein:

inlets to each of the first flow pathways are configured to be placed in communication with a common feed gas inlet; and

outlets from each of the first flow pathways are configured to be placed in communication with a common retentate gas outlet; and

outlets from each of the second flow pathways are configured to be placed in communication with a common permeate outlet.

Inlets to each of the second flow pathways may be configured to be placed in communication with a purge gas inlet, such as for a sweep stream, a flow of outside air or a mixture thereof; as disclosed herein.

A housing portion, an adjacent housing portion sealed thereto, together define an envelope as disclosed herein.

A housing portion sealed to two adjacent housing portions on opposite faces thereof may accordingly define each of two respective envelopes with each adjacent housing portion, as disclosed herein.

A support structure of each envelope in the cassette may be defined by one or both wall portions of the housing portions forming the envelope. The intermediate wall portion of the or each intermediate housing portion may define a support structure on each side thereof, in some embodiments.

The intermediate wall portion of an intermediate housing portion may be corrugated, wherein the corrugations define the ribs and channels of a support structure on both faces of the intermediate wall portion, i.e. The ribs on one face of a corrugated intermediate wall portion are be aligned with channels on the other face, and vice versa.

The corrugations may have a "peak to valley" depth (i.e. measured through the thickness of the intermediate housing portion from the crest of a rib on one face to the base of a channel on the same face) of around 0.5 - 3 mm, or around 1 -2 mm. The envelopes defined by an intermediate housing portion (i.e. by adjacent intermediate housing portions or end housing portions) may have a thickness of between around 2 - 5 mm, or a thickness of around 3 mm, 4 mm or 5 mm.

The cassette may further include a first inlet manifold that communicates with, and which may be connected or connectable to, each of the inlets to the first flow pathways. The first inlet manifold may have a single inlet to receive a feed gas, in communication with each of the inlets to the first flow pathways. The first inlet manifold may be sealed against a wall of the housing defined by the stacked wall portions of the stacked housing portions, for example via a gasket, bolts or the like. The first inlet manifold may be defined by the housing portions, for example by manifold spaces extending beyond respective peripheral portions, which when the housing portions are sealed to one another together form a manifold.

The cassette may further include a first outlet manifold that communicates with, and which may be connected or connectable to, each of the outlets to the first flow pathways. The first outlet manifold may have a single outlet for a retentate gas, in communication with each of the outlets from the first flow pathways. The first outlet manifold may be sealed against a wall of the housing defined by the stacked wall portions of the stacked housing portions. The first outlet manifold may be defined by the housing portions, for example by manifold spaces extending beyond respective peripheral portions.

The cassette may include a second outlet manifold that communicates with, and which may be connected or connectable to, each of the outlets to the second flow pathways. The second outlet manifold may have a single outlet for a permeate gas, in communication with each of the outlets from the second flow pathways. The second outlet manifold may be sealed against a wall of the housing defined by the stacked wall portions of the stacked housing portions. The second outlet manifold may be defined by the housing portions.

In some embodiments, the cassette may include a second inlet manifold that communicates with, and which may be connected or connectable to, each of the inlets to the second flow pathways. The second inlet manifold may have a single inlet for a purge gas, in communication with each of the outlets from the second flow pathways. The second inlet manifold may be sealed against a wall of the housing defined by the stacked wall portions of the stacked housing portions. The second inlet manifold may be defined by the housing portions.

The cassette may be arranged for cross flow, contraflow (also called counter-flow) or co-flow of the first and second flow pathways.

It will be understood that each manifold may include multiple inlets or outlets as the case may be, as required for a particular purpose.

The invention extends in a third aspect to the use of the envelope of the first aspect or the cassette of the second aspect as disclosed herein, in gas separation. The use may be to dehumidify a feed gas. The use may be to dehumidify vehicle cabin air, in a vehicle ventilation system. The vehicle may be a motor vehicle. The vehicle may be an electric vehicle (EV). The use may comprise use of a cassette comprising multiple envelopes.

In a fourth aspect, there is provided a method of selectively removing one or more first species from a feed gas comprising said one or more first species and one or more second species, the method comprising:

providing an envelope of the first aspect;

flowing the feed gas into the first flow pathway and contacting the first face of the membranous partition with the feed gas;

contacting the second face of the membranous partition with an environment having a lower partial pressure of the one or more first species;

permeating the one or more first species through the membranous partition at a higher normalised rate than the one or more second species;

removing a permeate gas comprising said one or more first species from the second flow pathway; and

flowing a retentate gas out of the first flow pathway, the retentate gas having a lower mol% of the one or more first species than the feed gas.

Herein reference to a higher or a lower partial pressure of one or more species of a gas in a gas separation process refer to the mol% of the species multiplied by the absolute pressure of the gas. The absolute pressures of any two gasses (for example a feed gas and a purge gas) can be higher or lower than one another, for any given partial pressure differential of a constituent one or more species, depending on the mol% present in each. Conversely, a higher or lower partial pressure will correspond to a higher or lower mol% of a given species, depending on the absolute pressure of a given gas.

The term "normalised rate" herein refers to the absolute rate (of permeation of a species) divided by the mol% of that species in the originating gas, e.g. the feed gas. Thus, a higher normalised rate of permeation results in a change in the mol% of the resulting gas, e.g. the retentate gas. It should be understood that, where a normalised rate of permeation of a first species is higher than the normalised rate of permeation of a second species, the absolute rate of permeation of the second species may be higher or lower than the absolute rate of permeation of the first species, depending on the mol% of each species in the feed gas.

The one or more first species may comprise water vapour, and the method may comprise dehumidifying the feed gas. The one or more first species may comprise carbon dioxide.

The feed gas may be flowed from a vehicle cabin. The feed gas may be flowed from an outside of a vehicle. The retentate gas, or a major portion of the retentate gas (retentate air) may be flowed into a vehicle cabin. The envelope may form part of a vehicle ventilation system, such as an HVAC system. The feed gas can be air. The air can be from the vehicle cabin or an outside of the vehicle.

The term "major portion" of the retentate gas, refer to at least 75%, 85% or 95% of the retentate gas. The "minor portion" is the balance of said retentate gas.

The one or more first species are permeated through the membranous partition at a higher normalised rate than the one or more second species at least in part due to the physical or chemical properties of the selectively permeable material of the membranous partition. Normalised rate of permeation of the one or more first species may also vary as a function of a partial pressure differential of the one or more first species across the membranous partition.

The method may further comprise raising the partial pressure of the one or more first species in the feed gas, and/or lowering the partial pressure of the one or first species contacting the second face of the membranous partition.

The feed gas and retentate may be at ambient pressure, in the first flow pathway. In other embodiments, the method comprises raising the pressure of the feed gas to above ambient pressure (to thereby raise the partial pressure of the one or more first species).

The method may comprise lowering the pressure of gas contacting the second face of the membranous partition, for example by applying a vacuum thereto.

The environment contacting the second side of the membranous partition may be at ambient pressure.

The method may comprise: flowing a purge gas into the second flow pathway, the purge gas having a lower partial pressure of the one or more first components than the feed gas; and removing the permeate (comprising the proportion of the one or more species having permeated through the membranous partition) by flowing a permeate gas out of the second flow pathway.

The method may comprise providing an intake gas. The purge gas may comprise, or consist of, an intake gas. An intake gas may, for example be ambient air. Ambient air can be from an outside environment, such as outside of a vehicle. Ambient air can be a proportion of, or taken from the same source as, the feed gas - for example vehicle cabin air.

The method may comprise lowering the partial pressure of the one of more first species in the purge gas in comparison to the intake gas, by flowing a minor portion of the retentate gas, which may be known in the art as a "sweep stream", into the second flow pathway optionally together with the intake gas. The method may comprise mixing the intake gas with the sweep stream to form the purge gas. The method may comprise lowering the absolute pressure of the intake gas, to form the purge gas.

The retentate gas, having a lower mol% of the one or more first species than the feed gas may in some applications also have a lower partial pressure of the one or more first species than the intake gas with which it is mixed. For example, in motor vehicle applications, to improve efficiency, it may be beneficial to lower the partial pressure of the one or more first species (e.g. water vapour and/or $CO_2$) in the purge gas, in comparison to the intake gas (e.g. outside air or cabin air). Mixing of the sweep stream, may lower the partial pressure of the one or more first species present in the purge gas in comparison to the intake gas. This increases or creates the partial pressure differential of the one or more first species across the membranous partition, and thus also increases the permeation rate thereof.

The method may comprise lowering the partial pressure of the one of more first species in the purge gas in comparison to the intake gas, by lowering the absolute pressure.

In other embodiments, the purge gas is formed entirely from the sweep stream. Method may comprise lowering the pressure of the sweep stream, to form the purge gas.

The method may comprise providing a cassette comprising multiple envelopes, wherein the feed gas is flowed into the first flow pathway of each envelope of the cassette and contacted with the first face of each envelope; wherein the second face of each envelope is contacted with an environment having a lower partial pressure of the one or more first species; wherein the one or more first species are permeated through each membranous partition at a higher normalised rate than the one or more second species and removed from each second flow pathway; and wherein a retentate gas is flowed out of each first flow pathway, the retentate gas having a lower mol% of the one or more first species than the feed gas.

The cassette may include a first inlet manifold that communicates with each of the inlets to the first flow pathways. The method may comprise flowing the feed gas through a feed gas inlet to the first inlet manifold. The method may comprise flowing the feed gas from the first inlet manifold into each first flow pathway.

The cassette may further include a first outlet manifold that communicates with each of the outlets to the first flow pathways. The method may accordingly comprise flowing the retentate gas out of the first flow pathways and into the first outlet manifold. The method may comprise flowing the retentate gas out of the first outlet manifold through a retentate outlet of the first outlet manifold.

The cassette may further include a second outlet manifold that communicates with each of the outlets to the second flow pathways. The method may accordingly comprise flowing the permeate gas out of the second flow pathways and into the second outlet manifold. The method may comprise flowing the permeate gas out of the second outlet manifold through a permeate outlet of the second outlet manifold.

The cassette may include a second inlet manifold that communicates with each of the inlets to the second flow pathways. The method may comprise flowing the feed gas through a purge gas inlet to the second inlet manifold. The method may comprise flowing the purge gas from the second inlet manifold into each second flow pathway. The cassette may comprise the features of the cassette of the second aspect.

In a fifth aspect, there is provided a gas separation system for selectively removing one or more first species from a feed gas, the feed gas comprising said one or more first species and one or more second species;

wherein the gas separation system comprises:

a membrane separation unit, having:

a feed gas inlet for the feed gas and an retentate gas outlet for a retentate gas; and a permeate outlet for a permeate gas;

an envelope of the first aspect, wherein the feed gas inlet and the retentate gas outlet communicate with first fluid pathway of the envelope; and wherein the permeate outlet communicates with the second flow pathway.

The membrane separation unit may include a cassette comprising multiple envelopes in accordance with the second aspect, as disclosed herein.

The cassette may include a first inlet manifold comprising the feed gas inlet, that communicates with the inlets to the first flow pathways.

The cassette may include a first outlet manifold that communicates with each of the outlets to the first flow pathways, and to the retentate outlet.

The cassette may include a second outlet manifold that communicates with each of the outlets to the second flow pathways and to the permeate outlet.

The cassette may include a second inlet manifold that communicates with each of the inlets to the second flow pathways and to the purge gas inlet.

In a sixth aspect, there is provided a gas separation system for selectively removing one or more first species from a feed gas, the feed gas comprising said one or more first species and one or more second species;

wherein the gas separation system comprises:

a membrane separation unit, having:

a feed gas inlet for the feed gas and a retentate gas outlet for a retentate gas; and a permeate outlet for a permeate gas;

wherein the feed gas inlet and the retentate gas outlet communicate with a first fluid pathway that communicates with a first side of a membranous partition, and wherein the permeate outlet communicates with a second flow pathway that communicates with a second face of the membranous partition.

The membranous partition may comprise a selectively permeable membrane having a permeability to water vapour greater than a permeability for at least oxygen and nitrogen. The selectively permeable membrane may be supported on a porous support. The membranous partition may for example be constructed generally as disclosed in relation to Figure 1.

The membranous partition may have a permeance of around 10,000 GPU, 12,000 GPU or 15,000 GPU to the at least one first species. The porous polymer membrane of the membranous partition may have a porosity of around or greater than 30%, 40%, 50%, 60%, 70%, 80% or 90%. The porosity of the porous polymer membrane may be a between around 20%-95%, or 30%-95%, or 40%-95% or 50%-95%. The porosity of the porous polymer membrane may be around 50%, 60%, 70%, 80%, 90% or 95%.

The membranous partition may be in accordance with the eighth, ninth or tenth aspects of the invention disclosed herein.

The gas separation system may further comprise a purge gas inlet in communication with the second flow pathway, whereby a purge gas having a lower partial pressure of the one or more first species than the feed gas is flowed over, or contacted with, the second face of the membranous partition.

The gas separation system of the sixth aspect may include a gas separation unit comprising an envelope or cassette comprising multiple envelopes, in accordance with the aspects and embodiments disclosed herein.

The gas separation system may comprise a pumping apparatus, to lower the pressure of (i.e. apply a vacuum to) the second flow pathway. The gas separation system may comprise means for increasing the pressure of the feed gas to above ambient pressure, such as a pump.

The gas separation system may be a dehumidification system. The one or more first species may comprise water vapour. The one of more first species may comprise carbon dioxide.

The gas separation system may be, or form part of an HVAC system, such as a building HVAC system.

The gas separation system may be, or form part of, a vehicle ventilation system. The vehicle may be a motor vehicle. The vehicle may be an EV.

The feed gas can be air. The air can be from the vehicle cabin or an outside of the vehicle.

It will be understood that permeate gas will be flowed from the second flow pathway to an outside of the vehicle.

The ventilation system may comprise ducting to supply air from a vehicle cabin to the feed gas inlet. The ventilation system may comprise ducting to supply air from outside of the vehicle. Typically, the ventilation system comprises apparatus to switch between the ducting from the cabin and outside of the vehicle. The ventilation system will further comprise ducting from the feed gas outlet to the vehicle cabin, to circulate or recirculate retentate air to the vehicle cabin.

The ventilation system may comprise a sweep stream conduit, for directing a sweep stream consisting of a minor portion of the retentate gas to the purge gas inlet, optionally to mix with the outside air. The sweep stream conduit may extend from the retentate outlet or the ducting downstream thereof, to the purge gas inlet or ducting upstream thereof.

The ventilation system may be configured to regulate flow through the various conduits or ducts, including a fan, baffles or valves, as known in the art. The ventilation system may be configured to operate in various different operating modes, depending on prevailing conditions.

An operating mode of the vehicle ventilation system may comprise the following:

- Cabin air flowed along ducting to the feed gas inlet.
- Retentate air recirculated to the vehicle cabin via ducting from the retentate outlet.
- Vacuum applied to the second flow pathway (e.g. to or downstream of the permeate outlet)

Such an operation condition may for example be suitable for winter operation of a vehicle.

Rate of dehumidification may be increased wherein the operating mode further comprises:

- Flowing a sweep stream of a minor portion of the retentate air into a purge gas inlet to the second flow pathway.

A flow of gas through the second flow pathway (across the second face) may enhance the moisture removal rate. Whilst not wishing to be bound by theory, a flow of gas may assist in disrupting a barrier layer of the second face, and mitigate against condensation.

In cold conditions, outside air must typically also be heated for occupant comfort, and so recirculation operating modes are normally most efficient. A sweep stream can reduce overall efficiency of a vehicle ventilation system, by increasing the rate of outside air that must be introduced into the vehicle cabin to compensate for the sweep stream (which, together with the purge gas, is flowed to an outside of the vehicle).

Alternative operating modes comprise flowing outside air to a purge gas inlet to the second flow pathway. The novel operating modes disclosed herein avoid the need for such outside air to be heated, thereby avoiding the additional energy costs that might otherwise be incurred.

The inventors have devised a novel operating mode, made possible by the inventive envelopes and membranous partitions disclosed herein.

In a seventh aspect of the invention, there is accordingly disclosed an operating mode of the vehicle ventilation system of other aspects disclosed in, comprising the following:

- Cabin air supplied along ducting to the feed gas inlet.
- Retentate air recirculated to the vehicle cabin via ducting from the retentate outlet.
- Outside air supplied along ducting to the purge gas inlet (which may be entirely, substantially or partly unheated).
- Vacuum optionally applied to the second flow pathway (e.g. to or downstream of the permeate outlet).

The outside air, in cold operating conditions, will typically have low humidity and thus have a lower partial pressure of water vapour than the cabin air feed gas. In some circumstances, the outside air need not be heated in the manner of conventional HVAC systems (which for vehicles typically raise the outside air temperature to vehicle cabin temperature), and may be only partially heated or entirely unheated (i.e. flowed at ambient temperature into the second flow pathway).

According to an eighth aspect, the invention relates to a membranous partition for use as a dehumidification membrane, the membranous partition comprising a porous polymer membrane and a selectively permeable material having a permeability for water vapour that is higher than the permeability for nitrogen and oxygen; wherein the membranous partition has a permeance of at least around 10,000 GPU.

The membranous partition may have a permeance of at least around 10,000 GPU, 12,000 GPU or 15,000 GPU.

The porous polymer membrane of the membranous partition may have a porosity of around or greater than 30%, 40%, 50%, 60%, 70%, 80% or 90%. The porosity of the porous polymer membrane may be a between around 20%-95%, or 30%-95%, or 40%-95% or 50%-95%. The porosity of the porous polymer membrane may be around 50%, 60%, 70%, 80%, 90% or 95%.

The membranous partition may have a thickness (between the first and second sides) on the order of 0.1 to 100 $\mu$m, or 0.1 to 50 $\mu$m, or 0.1 to 20 $\mu$m, or 0.1 to 10 $\mu$m. The membranous partition may have a thickness of around 2 $\mu$m, around 5 $\mu$m or around 10 $\mu$m.

The membranous partition advantageously lacks a further protective layer, such as a non-woven protective layer.

The porous polymer membrane may be an expanded polymer membrane.

The porous polymer membrane may comprise any suitable polymer, for example a fluoropolymer such as PTFE or a thermoplastic such as polyethylene (PE, including UHMWPE), polypropylene (PP) or the like, polyamide, polyester, polyethylene terephthalate (PET), polyparaxylylene or polyacids including polylactic acid (PLA ). The porous polymer membrane may comprise PP, PTFE or PE.

The porous polymer membrane may be an expanded polymer membrane. The porous polymer membrane may be an expanded polypropylene (ePP), expanded polyethylene (ePE) or an expanded polytetrafluoroethylene (ePTFE) membrane.

The porous polymer membrane may be imbibed with the selectively permeable material, through at least a part of the thickness of the porous polymer membrane, together forming a composite membrane.

The membranous partition may comprise two or more than two such composite membranes.

In some embodiments, the composite membrane is a partially imbibed composite membrane, imbibed through a part of the thickness of the membrane and the composite membrane comprises a coating of the selectively permeable material on a coated face, wherein the opposite face of the membrane is a bare face, free of the selectively permeable material.

The membranous partition may comprise at least two partially imbibed composite membranes, wherein first and second faces of the membranous partition are defined by bare faces of each of two partially imbibed composite membranes.

The membranous partition in some embodiments comprises two partially imbibed composite membranes bonded together via the coated faces thereof.

Further optional features of the membranous partition correspond to further features of the membranous partitions of other aspects disclosed herein.

According to a ninth aspect of the invention, there is provided a membranous partition for use in gas separation, comprising:

a porous polymer membrane; and

a selectively permeable material having a permeability of an at least one first species through the membranous partition that is greater than the permeability of an at least one second species;

wherein the porous polymer membrane is imbibed with the selectively permeable material through at least a part of the thickness of the porous polymer membrane.

The porous polymer membrane may be an expanded polymer membrane. The porous polymer membrane may be is an ePP, ePE or an ePTFE membrane.

The membranous partition may have a permeance of the at least one first species of at least around 10,000 GPU, 12,000 GPU or 15,000 GPU.

The porous polymer membrane may have a porosity of around or greater than 30%, 40%, 50%, 60%, 70%, 80% or 90%. The porosity of the porous polymer membrane may be a between around 20%-95%, or 30%-95%, or 40%-95% or 50%-95%. The porosity of the porous polymer membrane may be around 50%, 60%, 70%, 80%, 90% or 95%.

The membranous partition, or the membrane thereof, may have a thickness (between the first and second sides) on the order of 0.1 to 100 $\mu$m, or 0.1 to 50 $\mu$m, or 0.1 to 20 $\mu$m, or 0.1 to 10 $\mu$m. The membranous partition may have a thickness of around 2 $\mu$m, around 5 $\mu$m or around 10 $\mu$m.

The selectively permeable material may comprise a material selected from silicone material, a polyurethane material, an ionomer material, a polyvinyl material, a polyamide material, a polyimide material, a hydrophilic biopolymer material.

Further optional features of the membranous partition correspond to further features of the membranous partitions of other aspects disclosed herein.

According to a tenth aspect, the invention relates to a membranous partition for use as a gas separation membrane, the membranous partition having a first face and an opposite second face, and the membranous partition comprising:

first and a second composite membrane, each comprising a porous polymer membrane imbibed with a selectively permeable material through a part of the thickness of the porous polymer membrane;

the selectively permeable material having a permeability for at least one first species that is greater than a permeability for at least one second species;

each the composite membrane having:

a coated face, comprising a coating of the selectively permeable material; and

a bare face, free of the selectively permeable material;

and wherein the first and second faces of the membranous partition are defined by bare faces of each of two partially imbibed composite membranes.

The membranous partition in some embodiments comprises two partially imbibed composite membranes bonded together via the coated faces thereof.

The membranous partition may comprise more than two composite membranes.

The membranous partition may have a permeability to the at least one first species of at least around 10000 GPU.

The membranous partition may have a permeance of around 10,000 GPU, 12,000 GPU or 15,000 GPU to the at least one first species.

The at least one first species may comprise water vapour. The at least one first species may comprise carbon dioxide.

The at least one second species may comprise oxygen and nitrogen.

The membranous partition may be for dehumidification of air.

Each porous polymer membrane may, independently, have a porosity, and/or a thickness as disclosed herein in relation to other aspects. Each porous polymer membrane may, independently, comprise any suitable polymer, including those disclosed herein in relation to other aspects.

Each porous polymer membrane may be an expanded polymer membrane. Each porous polymer membrane may, independently, be an ePP, ePE or an ePTFE membrane.

Further optional features of the membranous partition correspond to further features of the membranous partitions of other aspects disclosed herein.

In an eleventh aspect, there is provided a method of selectively removing one or more first species from a feed gas comprising said one or more first species and one or more second species, the method comprising:

providing a membrane separation unit, having:

a feed gas inlet for the feed gas and an retentate gas outlet for a retentate gas; and a permeate outlet for a permeate gas;
wherein the feed gas inlet and the retentate gas outlet communicate with a first fluid pathway that communicates with a first side of a membranous partition in accordance with the eighth, ninth or tenth aspect, and wherein the permeate outlet communicates with a second flow pathway that communicates with a second face of the membranous partition;

flowing the feed gas into the first flow pathway and contacting the first face of the membranous partition with the feed gas;
contacting the second face of the membranous partition with an environment having a lower partial pressure of the one or more first species;
permeating the one or more first species through the membranous partition at a higher normalised rate than the one or more second species;
removing a permeate gas comprising said one or more first species from the second flow pathway; and
flowing a retentate gas out of the first flow pathway, the retentate gas having a lower mol% of the one or more first species than the feed gas.

In a twelfth aspect, there is provided a method of dehumidifying a feed gas, the feed gas comprising water vapour and one or more second species, the method comprising:

providing a membrane separation unit, having:

a feed gas inlet for the feed gas and an retentate gas outlet for a retentate gas; and a permeate outlet for a permeate gas;
wherein the feed gas inlet and the retentate gas outlet communicate with a first fluid pathway that communicates with a first side of a membranous partition in accordance with the eighth aspect, and wherein the permeate outlet communicates with a second flow pathway that communicates with a second face of the membranous partition;

flowing the feed gas into the first flow pathway and contacting the first face of the membranous partition with the feed gas;
contacting the second face of the membranous partition with an environment having a lower partial pressure of water vapour;
permeating the water vapour through the membranous partition at a higher normalised rate than the one or more second species;
removing a permeate gas comprising water vapour from the second flow pathway; and flowing a retentate gas out of the first flow pathway, the retentate gas having a lower mol% of water vapour than the feed gas.

The feed gas may be air. The feed gas may be cabin air, of a vehicle.
In a thirteenth aspect of the invention there is provided the use of a membranous partition in accordance with the eighth, ninth or tenth aspect in gas separation. The gas separation system may be an HVAC system (e.g. of a building) or a vehicle ventilation system.
In a fourteenth aspect, there is provided a method of dehumidifying cabin air of a vehicle, comprising:

providing a membrane separation unit, having:

a membranous partition comprising a selectively permeable membrane, the selectively permeable membrane having a permeability to water vapour greater than a permeability for at least oxygen and nitrogen;
a feed gas inlet for the cabin air and a retentate gas outlet for a retentate gas; and a permeate outlet for a permeate gas;
a first fluid pathway that communicates with a first side of a membranous partition; and
a second flow pathway that communicates with a second face of the membranous partition;
wherein the feed gas inlet and the retentate gas outlet communicate with the first fluid pathway, and wherein the permeate outlet communicates with the second flow pathway;

flowing the cabin air along a conduit and into the first flow pathway and contacting the first face of the membranous partition with the cabin air;

contacting the second face of the membranous partition with an environment having a lower partial pressure of water vapour than the first face;

permeating the water vapour through the membranous partition from the first face to the second face at a higher normalised rate than at least oxygen and nitrogen;

removing a permeate gas comprising water vapour from the second flow pathway;

flowing a retentate gas out of the first flow pathway, and recirculating the retentate air via ducting to the vehicle cabin; the retentate gas having a lower mol% of water vapour than the feed gas; and

one or both of:

supplying outside air (which may be partially or completely unheated) along further ducting from an outside of the vehicle to the purge gas inlet;

applying a vacuum to the second flow pathway.

The membranous partition may comprise a selectively permeable membrane having a permeability to water vapour greater than a permeability for at least oxygen and nitrogen. The selectively permeable membrane may be supported on a porous support. The membranous partition may for example be constructed generally as disclosed in relation to Figure 1.

The membranous partition may have a permeance of around 10,000 GPU, 12,000 GPU or 15,000 GPU to the at least one first species. The porous polymer membrane of the membranous partition may have a porosity of around or greater than 30%, 40%, 50%, 60%, 70%, 80% or 90%. The porosity of the porous polymer membrane may be a between around 20%-95%, or 30%-95%, or 40%-95% or 50%-95%. The porosity of the porous polymer membrane may be around 50%, 60%, 70%, 80%, 90% or 95%.

The membranous partition may be in accordance with the eighth, ninth or tenth aspects of the invention disclosed herein.

The membrane separation units disclosed herein may comprise multiple membranous partitions, or multiple envelopes; for example in a stack or cassette of membranous partitions or envelopes, each sharing common inlets and outlets. The envelopes or cassettes may be in accordance with aspects and embodiments disclosed herein.

The method may comprise providing a membrane separation unit comprising an envelope in accordance with aspects and embodiments disclosed herein. The method may comprise providing a membrane separation unit having a cassette comprising multiple envelopes, wherein the feed gas is flowed into the first flow pathway of each envelope of the cassette and contacted with the first face of each envelope; wherein the second face of each envelope is contacted with an environment having a lower partial pressure of the one or more first species; wherein the one or more first species are permeated through each membranous partition at a higher normalised rate than the one or more second species and removed from each second flow pathway; and wherein a retentate gas is flowed out of each first flow pathway.

The cassette may include a first inlet manifold that communicates with each of the inlets to the first flow pathways. The method may comprise flowing the feed gas through a feed gas inlet to the first inlet manifold. The method may comprise flowing the feed gas from the first inlet manifold into each first flow pathway.

The cassette may further include a first outlet manifold that communicates with each of the outlets to the first flow pathways. The method may accordingly comprise flowing the retentate gas out of the first flow pathways and into the first outlet manifold. The method may comprise flowing the retentate gas out of the first outlet manifold through a retentate outlet of the first outlet manifold.

The cassette may further include a second outlet manifold that communicates with each of the outlets to the second flow pathways. The method may accordingly comprise flowing the permeate gas out of the second flow pathways and into the second outlet manifold. The method may comprise flowing the permeate gas out of the second outlet manifold through a permeate outlet of the second outlet manifold.

The cassette may include a second inlet manifold that communicates with each of the inlets to the second flow pathways. The method may comprise flowing the purge gas through a purge gas inlet to the second inlet manifold. The method may comprise flowing the purge gas from the second inlet manifold into each second flow pathway.

The fourteenth aspect may also be understood with reference to the following numbered clauses:

Clause 1. A dehumidifying system for a vehicle, for selectively removing water vapour from a feed gas, wherein the feed gas is vehicle cabin air;

wherein the dehumidifying system comprises:

a membrane separation unit, having:

a membranous partition comprising a selectively permeable membrane, the selectively permeable membrane having a permeability to water vapour greater than a permeability for at least oxygen and nitrogen;

a feed gas inlet for the cabin air and a retentate gas outlet for a retentate gas; and a permeate outlet for a permeate gas;

a first flow pathway that communicates with a first side of a membranous partition; and

a second flow pathway that communicates with a second face of the membranous partition;

wherein the feed gas inlet and the retentate gas outlet communicate with the first flow pathway, and wherein the permeate outlet communicates with

the second flow pathway;

ducting for supplying air from a vehicle cabin to the feed gas inlet and/or ducting for supplying air from outside of the vehicle; and

ducting for flowing the retentate gas outlet to the vehicle cabin, to circulate or recirculate retentate air to the vehicle cabin:

wherein the system is configurable to have an operating mode, wherein the operating mode comprises:

- supplying cabin air supplied along the ducting from the vehicle cabin to the feed gas inlet;
- recirculating retentate air to the vehicle cabin via ducting from the retentate outlet; and
- one or both of:

supplying outside air, optionally unheated, along further ducting from an outside of the vehicle to a purge gas inlet to the second fluid pathway;

applying a vacuum to the second flow pathway.

Clause 2. The dehumidifying system of clause 1, wherein the operating mode further comprises:
flowing a sweep stream of a minor portion of the retentate air into a purge gas inlet to the second flow pathway.

Clause 3. The dehumidifying system of clause 1 or 2, wherein the membranous partition has a permeance of at least around 10,000 GPU, 12,000 GPU or 15,000 GPU to water vapour; and/or a thickness of 0.1 $\mu$m to 100 $\mu$m, or 0.1 to 50 $\mu$m.

Clause 4. The dehumidifying system of any preceding clause, wherein the membranous partition comprises a porous polymer membrane; and a selectively permeable material having a permeability for water vapour that is higher than the permeability for nitrogen and oxygen.

Clause 5. The dehumidifying system of clause 4, wherein the porous polymer membrane is an ePP, ePE or an ePTFE membrane.

Clause 6. The dehumidifying system of clause 4 or 5, wherein the porous polymer membrane is imbibed with the selectively permeable material, through at least a part of the thickness of the porous polymer membrane, together forming a composite membrane.

Clause 7. The dehumidifying system of clause 6, wherein the membranous partition comprises two or more than two such composite membranes;

wherein each composite membrane is a partially imbibed composite membrane, and comprises a coating of the selectively permeable material on a coated face;

wherein the opposite face of the membrane is a bare face, free of the selectively permeable material; and

wherein the first and second faces of the membranous partition are defined by bare faces of each of two partially imbibed composite membranes.

Clause 8. The dehumidifying system of any one of clauses 4 to 7, wherein the selectively permeable material comprises a material selected from silicone material, a polyurethane material, an ionomer material, a polyvinyl material, a polyamide material, a polyimide material.

Clause 9. The dehumidifying system of any one of clauses 4 to 8, wherein the porous polymer membrane has a porosity of 40%-95%.

Clause 10. The dehumidifying system of any preceding clause, wherein the membrane separation unit comprises:

a housing;
the membranous partition sealed within the housing around a periphery of the membranous partition; and wherein the membranous partition comprises a porous polymer membrane and a selectively permeable material;
the housing defining, at least in part, the first flow pathway and the second flow pathway; and
the housing comprising a support arrangement directly against the first face or the second face of the membranous partition, and configured to mechanically support the membranous partition and define at least a part of the respective first or second flow pathway.

Clause 11. The dehumidifying system of clause 10, wherein the open area of the membranous partition is above around 50% of the total area of the second face.

Clause 12. The dehumidifying system of clause 10 or 11, wherein the support arrangement comprises a shaped support structure, having a plurality of support formations and a plurality of recessed formations.

Clause 13. The dehumidifying system of clause 12, wherein the support formations comprise a plurality of elongate ribs, and the recessed formations comprise elongate channels between the ribs.

Clause 14. The dehumidifying system of any one of clauses 10 to 13:

wherein the housing comprises a frame having a perimeter portion and a wall portion, together defining a recess;
wherein the membranous partition is set into or over the recess and sealed to the perimeter portion; and
wherein the perimeter portion defines a part of the first flow pathway and/or the second flow pathway; one or one or more first apertures or channels extending through the perimeter portion, the first apertures or channels defining a part of the first flow pathway and/or one or more second channels or apertures may extending through the perimeter portion, the second apertures or channels defining a part of the second flow pathway.

Clause 15. The dehumidifying system of clause 14, wherein the housing is of sandwich construction, formed of first and second housing portions sandwiched together via respective first and second perimeter portions, the first and second perimeter portions together defining a perimeter portion of the housing, wherein a periphery of the membranous is sandwiched and sealed between the first and second housing portions.

The systems disclosed in relation to any aspect or embodiment herein may comprise multiple membrane separation units, for example each configured to separate a different gas, using different selectively permeable materials. Indeed a given membrane separation unit may include more than one type of membranous partition, or envelope as disclosed herein, each using a different selectively permeable material. For example it may be desirable for a first membranous partition to be adapted for selective permeation of water vapour, and for a second membranous partition to be adapted for selective permeation of another species such as $CO_2$.

The term feed gas herein refers to the gas which is flowed into the first flow pathway and contacted with the first side of the membranous partition in a gas separation process. The feed gas comprising one or more first species and one or more second species. In use of the membranous partition in a gas separation process, it is desired to remove some or all of the one or more first species.

The term retentate gas herein refers to the gas flowed out of the first flow pathway having been contacted with the first side of the membranous partition in a gas separation process. The retentate gas has a lower mol% of the one of more first species in comparison to the mol% of the one or more second species, than the feed gas.

The term purge gas herein refers to the gas flowed into and contacted with the second side of the membranous partition, in a gas separation process. In the conditions used for gas separation, the purge gas has a lower partial pressure of the at least one first species than the feed gas. The purge gas may have a higher, the same, or lower mol% of the at least one first species than the feed gas, depending on the absolute pressure conditions on the first and second sides of the membranous partition during a particular gas separation process. The purge gas may be from the same source (e.g. a vehicle cabin) or a portion of the feed gas, wherein the lower partial pressure of the at least one first species is achieved by lowering the absolute pressure in the second flow pathway.

The term permeate gas herein refers to the gas flowed out of the second flow pathway (for example, by applying a vacuum thereto) in a gas separation process. The permeate gas comprises the permeate, and thus the proportion of the at least one species which has permeated through the membranous partition. The permeate gas may additionally include a proportion of the at least one second species having permeated through the membranous partition and/or the components of the purge gas. Where a purge gas is used, the permeate gas will additionally include the species present in the purge gas.

The term permeate herein refers to species that have permeated through the membranous partition in a gas separation process (including at least the proportion of the one or more first species that have permeated through the membranous partition).

The term sweep gas herein refers to a portion of the retentate gas used to form the purge case, optionally mixed with an intake gas.

The term intake gas refers to a gas input to a gas separation process to form or constitute the purge gas. The intake gas may comprise a proportion of the one or more first species and/or the one or more second species. The intake gas may have a lower partial pressure of the one or more first species than the feed gas, depending on the absolute pressure conditions. A sweep stream may be used to provide for a lower partial pressure (and typically also the mol%) of the at least one first species in the purge gas, in comparison to the intake gas. The intake gas may be a sweep stream.

The various optional or alternative features discussed in relation to each of the aspects disclosed above correspond to optional or alternative features disclosed in relation to any other aspect. In particular, where a certain product structure or element is disclosed in the context of one aspect, it is contemplated that any features or options disclosed in relation to that structure or element be interchangeable with the same structure or element disclosed in relation to any other aspect. Similarly, optional or alternative steps of the various aspects of the methods disclosed herein are contemplated in relation to any other aspects of the methods disclosed herein.

Unless otherwise stated, the term "comprise", as applied herein to a product or method comprising one or more subsequently features, means that the product or method includes said one or more subsequently stated features in addition to other features, or may consist, or consist essentially of, the one or more subsequently stated features.

Description of the Drawings

Non-limiting illustrative examples will now be described with reference to the following figures in which:

Figure 1 shows a conventional prior art barrier for membrane gas separation;

Figures 2(a)-2(c) show schematic cross sections of composite membranes and membranous partitions;

Figure 3 is a schematic perspective view of an envelope;

Figure 4 is a schematic cross sectional view of an envelope of the prior art;

Figure 5 is a schematic cross sectional view of an envelope in accordance with the invention;

Figure 6 is a schematic cross sectional view of another envelope in accordance with the invention;

Figure 7 is a perspective view of a housing portion of an envelope in accordance with the invention;

Figures 8(a) is a perspective view of a housing portion of an envelope in accordance with the invention; and Figure 8(b) is a perspective view of the housing portion of a partially assembled envelope;

Figures 9(a) and (b) show perspective and detail view of another housing portion in accordance with the invention;

Figures 10(a) and (b) show perspective and detail view of still further housing portion in accordance with the invention;

Figures 11(a) and (b) show perspective views of the end housing portions of a cassette; Figure 11(c) shows a perspective view of an intermediate housing portion of the cassette; Figure 11(d) shows a cross sectional perspective view of the intermediate housing portion of Figure 11(c); and Figure 11(e) shows a close up cross sectional perspective view of the intermediate housing portion with membranous partitions;

Figures 12(a) and (b) show cross sectional views of alternative support structures of an intermediate housing portion;

Figure 13 shows a perspective view of a cassette;

Figure 14(a) shows a perspective view of an alternative embodiment of an intermediate housing portion and Figure 14(b) shows a perspective view of an alternative embodiment of a cassette with an inlet and an outlet manifold;

Figure 15(a) shows a perspective view of another embodiment of an intermediate housing portion; Figure 15(b) shows a cross sectional perspective view of the intermediate housing portion; and Figure 15(c) shows a cross sectional side view of the intermediate housing portion;

Figure 16(a) is an exploded view of a test fixture; Figure 16(b) is an image of a cassette connected to a pair of inlet and outlet manifolds; and Figure 16(c) is an image of another cassette connected to an inlet and an outlet manifold;

Figure 17 is a diagram of a test setup for evaluating example test envelopes V1-V4 and the C5/V6, V7 and V8 cassettes;

Figure 18 shows Moisture Removal Efficiency data for test four envelopes V1-V4 at different operating conditions set out in Table 1;

Figure 19 shows data for the relative humidity drop across envelope V4 as a function of air velocity through the test setup of Figure 17;

Figure 20 shows moisture removal efficiency data for a test membrane at varying applied vacuum pressures;

Figure 21 shows moisture removal efficiency data for a test membrane at varying applied vacuum pressures and at each of two feed gas flow rates;

Figure 22 shows moisture removal efficiency data for a test membrane at varying applied vacuum pressures and comparing with and without non-woven support;

Figures 23-25 are diagrams illustrating envisaged vehicle ventilation system operating modes utilizing membrane dehumidification.

Figure 26 shows a simulated change of cabin dew point vs time with and without dehumidification;

Figure 27 shows another simulated change of cabin dew point vs time with and without dehumidification;

Figure 28 shows example calculations with outside air purge of a vehicle ventilation system including a membrane dehumidification unit for example flow rates over and outside air conditions;

Figure 29 shows moisture removal efficiency data for a test cassette at a range of operating conditions;

Figure 30 shows moisture removal efficiency data for another test cassette at a range of operating conditions;

Figure 31 shows moisture removal efficiency data for still further test cassette at a range of operating conditions;

Figure 32 shows moisture removal efficiency for three test cassettes under comparable test conditions;

Figure 33 shows moisture removal efficiency data for a test cassette using a cold air purge (-20C) at different feed flows and humidity; and

Figure 34 shows cassette performance at ambient temperature (22C) and different humidity levels.

## Detailed description of Example Embodiments

Figure 2(a) shows a composite membrane 10 for use in gas separation. The composite membrane may be used as a membranous partition in gas separation methods and apparatus in accordance with the invention, either alone or together with further composite membranes bonded or laminated thereto.

The composite membrane 10 is formed of a porous polymer membrane 12, such as an expanded polyethylene (ePE) or an expanded polytetrafluoroethylene (ePTFE) membrane having a porosity of, in example embodiments, around 40% or up to 90% - depending on expansion conditions selected. Expanded membranes having thicknesses between 0.1

μm up to around 20 μm have been tested. Alternative polymers may be used, as disclosed herein.

The porous membrane 12 is imbibed with a selectively permeable material 14, such as polyurethane. A selectively permeable material has a greater permeability to one or more first species, such as water vapour and/or carbon dioxide, than one or more second species, such as oxygen, nitrogen or carbon dioxide. The permeability of a material, such as silicone or polyurethane may depend on the dipole or quadrupole moment of a gas species, such that a material with a high permeability to one species, such as water vapour, may also be associated with a relatively high permeability of another species, such as carbon dioxide.

Alternative materials may be used, as disclosed herein, for example to be selectively permeable for VOCs. The composite membrane 10 is imbibed with the selectively permeable material through the entire thickness of the composite membrane.

Various methods of imbibing can be used, as disclosed above. However, in examples, the expanded membrane 12 is wet out by a solution or suspension of the polyurethane selectively permeable material 14, so as to substantially fill the pores of the expanded membrane 12.

The composite membrane 10 has a first side 16 and a second side 18, and the material of the porous membrane 12 and the selectively permeable material 14 provide a continuous barrier between the first and second faces 16, 18 and thus the selectively permeable properties of the selectively permeable material are inherited by the composite membrane. Conversely, the expanded porous membrane 12 functions as a scaffold, providing mechanical support to the selectively permeable material 14.

The surface porosity of the membrane 12, corresponding to the available proportion of the first and second surfaces for the selectively permeable material 14, is comparatively high (at least 40% and as high as 90% in example embodiments). This compares to porosities of around 20% for known gas separation barriers. Moreover, the expanded porous membrane 12 effectively replaces the porous support of prior art barriers (such as shown in Figure 1) and has mechanical properties (in particular tensile strength) such that a protective non-woven layer is not required. Thus, the composite membrane provides for a low permeation pathway (through the thickness of the composite membrane 10) and for the removal of diffusion barriers conventionally imposed by the porous support 3 and non-woven protective layer 4 shown in Figure 1.

Figure 2(b) shows a partially imbibed composite membrane 20, imbibed with selectively permeable material 14 through a part of the thickness of the porous membrane 12. The composite membrane has a bare surface 18 that is free of any selectively permeable material 14, and the opposite coated surface 16, having a thin coating of the selectively permeable material 14. A region 17 through the thickness of the membrane 12 adjacent to the surface 16 is imbibed, and a region 19 through the thickness of the membrane 12 adjacent to the surface 18 is not imbibed.

A partially Imbibed membrane 20 can be formed by applying selectively permeable material 14 from one face of the porous membrane 12, for example by spraying or otherwise coating such that the membrane 12 wets out from one side. In some examples, a film of a flowable selectively permeable material is placed against the one surface of the porous membrane 12, and by the action of pressure and temperature caused to flow into the pores of the membrane 12, to form the partially imbibed membrane 20.

Figure 2(c) shows a membranous partition 30 formed from two partially imbibed membranes 20a, 20b with the bare surfaces 14a, 14b defining outer first and second surfaces 32, 34 of the membranous partition 30. The respective porous polymer membranes 12a, 12b are bonded together by the selectively permeable material 14 of the coated surfaces 16a, 16b. Having bare outer surfaces 32, 34 provides for ease of handling of the membranous partition 30, for example in construction of an envelope as disclosed herein.

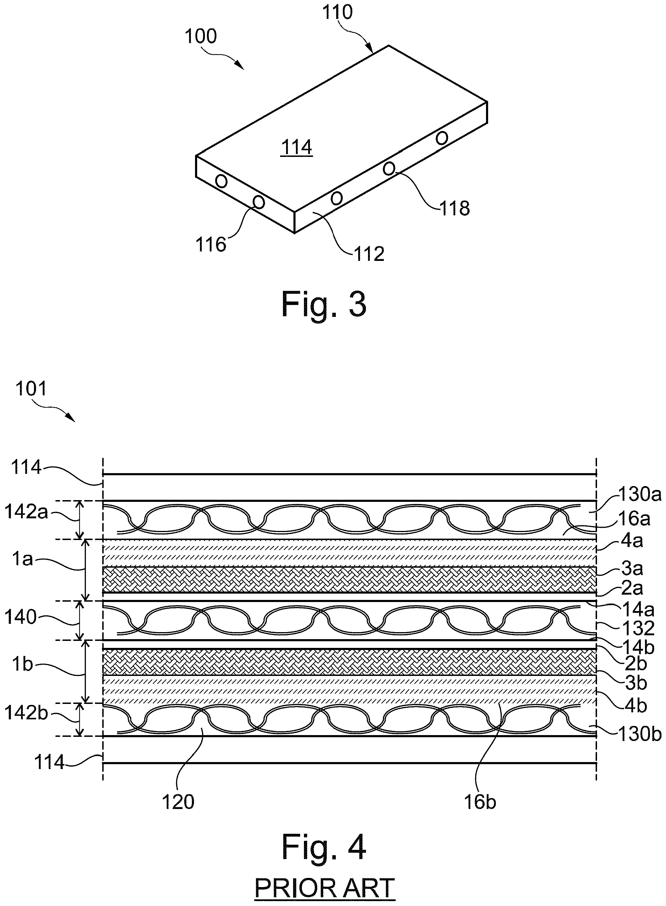

In membrane gas separation systems, a membrane barrier is conventionally mounted in an envelope, to define a first flow pathway in communication with a first side of the barrier, and second flow pathway in communication with a second side of the barrier. As shown in Figure 3, an envelope 100 can include a housing 110 configured to support a membranous partition in accordance with the invention within an internal cavity. As disclosed in further detail below, the membranous partition is sealed around a periphery to the housing, thereby separating the first and second flow pathways. The housing 110 has a peripheral portion 112 and a wall portion 114. Apertures or channels 116, 118 extend through the wall portion, extending to the first and second flow pathways.

As discussed in further detail below, the apertures or channels 116, 118 can communicate with respective parts of a gas separation system, such as a vehicle ventilation system.

Figure 4 shows a schematic cross sectional view through the thickness of a prior art envelope 101, with wall portions 114 of a housing and a cavity 120 therein. Within the cavity 120 are gas separation membrane partitions 1a and 1b, generally as described above with reference to Figure 1, each having a gas separation membrane or film, of the selectively permeable material 2, a porous support 3 and a non-woven layer 4 to provide mechanical protection to the partition 1a, 1b from forces applied between the barrier a mech support. Each feature of the respective partition 1a and 1b is labelled "a" and "b" in Fig. 4, accordingly. Each partition 1a, 1b has a first face 14a, 14b and an opposite second face 16a, 16b.

Also in the cavity 120 are mesh supports 130a, 130b and 132. The mesh support 132 is against the first faces 14a, 14b of the barriers 1a, 1b. The mesh supports 130a, 130b are against the second faces 16a, 16b.

The mesh support 132 acts as a spacer between the first faces 14a, 14b of the partitions 1a, 1b, and the space between the partitions is a first flow pathway 140, that communicates with a group of apertures 118. The mesh supports 130a, 130b act as spacers between the second faces 16a, 16b of the partition 1a, 1b and the housing, to define a second flow pathway 142a, 142b that communicates with respective first faces 16a, 16b of the partition and another group of apertures 116.

As disclosed herein, the selectively permeable material 2a, 2b has a higher permeability to one or more first species than to one or more second species. In use in membrane gas separation, such as dehumidification applications, the one or more first species (for example water vapour) permeate through the barriers 1a, 1b due to a partial pressure differential of the one or more first species between the first and the second flow pathways 140 and 142a, 142b.

Commonly, to create or increase the partial pressure differential, absolute pressure in the first flow pathway 140 is increased be pressuring a feed gas (e.g. air), and/or pressure in the second flow pathway 142a, 142b is reduced, by applying a vacuum thereto. Consequently, where an absolute pressure differential is applied between the first faces 14a, 14b and second faces 16a 16b of a membrane partition 1a, 1b, a force is applied between the partitions and the supporting mesh 130a, 130b. In order to prevent damage to the porous support 3a, 3b or selectively permeable film 2a, 2b, a protective non-woven layer 4a, 4b is required. By virtue of the thickness and porosity of these layers, a significant limitation is imposed to gaseous species diffusing to and away from contact with the selectively permeable material 2a, 2b, which in turn limits efficiency of a gas separation system.

Note that while the schematic depiction of Figure 4 shows the mesh supports 130a, 130b and 132 as being of similar thickness, it will be understood that in practice different thicknesses may be used, with the mesh 130a, 130b on the lower partial pressure side - against the second faces 16a, 16b typically being thinner in comparison to the mesh 132 (or alternative spacer structure) on the higher partial pressure - against the first faces 14a, 14b. The first flow pathway may for example be up to 1 to 1.5mm thickness in some embodiments (of both prior art envelopes and those in accordance with the invention).

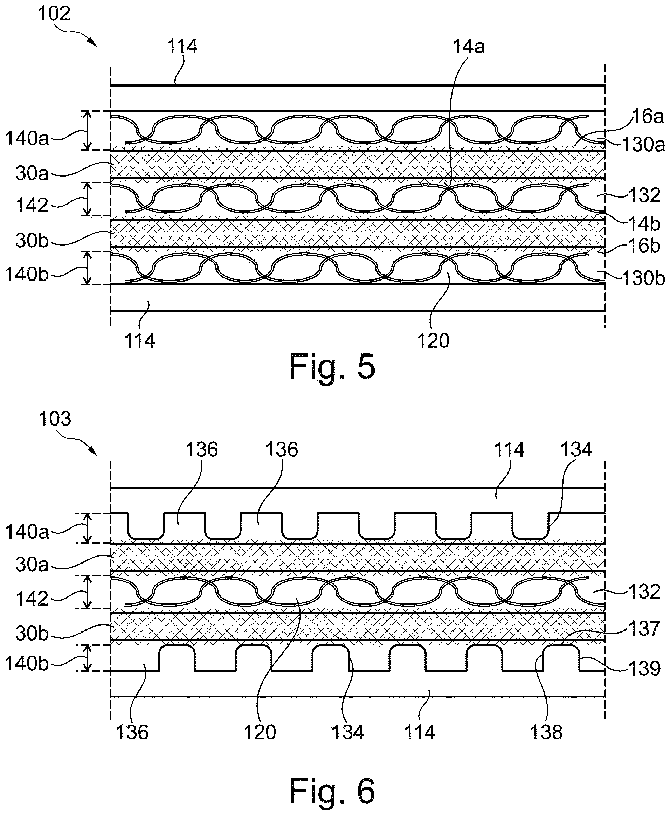

Figure 5 shows a corresponding cross sectional view of an envelope in accordance with the invention. The envelope 102 is similarly mounted in a cavity 120 between the wall portions 114 of a housing. Membranous partitions formed of partially imbibed composite membranes 30a, 30b are positioned in the cavity and sealed around their periphery. The mesh support 132 (an example of a support arrangement) is directly against the first faces 14a, 14b. Mesh supports 130a, 130b are directly against the second faces 16a, 16b. The envelope lacks any protective layer between the mesh supports 130a, 130b, 132 and the membranous partitions 30a, 30b. Moreover, and as discussed herein, greater permeation rates can be realised, due to shorter diffusion pathways to the selectively permeable material, a thinner overall membranous partition construction and, in certain embodiments, higher porosity of the underlying expanded porous membranes

Whilst partially imbibed composite membranes 30a, 30b are shown, other imbibed membranes may also be used, and other membranous partitions having porous polymer membranes disclosed herein may also be used.

Figure 6 shows a schematic cross sectional view of another embodiment of an envelope 103 in accordance with the invention. Features in common with the embodiment of Figure 5 are provided with like reference numerals. In place of the mesh supports 130a, 130b of the envelope 101, a support arrangement of the envelope 103 is provided by elongate ribs 134 (support formations) extending from the inside of the wall portions 114. Defined between the ribs 134 are channels 136. The ribs have flattened supporting faces 137 which transition smoothly (via curved regions 138) to lateral faces 139 of the channels 136.

Whilst ribs and channels are used in the envelope 103, in alternative embodiments (not shown) other geometries of protrusions may be used to define flow pathways therebetween. Moreover, whilst the support arrangements of the envelope 103 are co-moulded with the housing and form part of and extend from the walls 114, in alternative embodiments a support arrangement comprising a moulded or machined support structure can be provided in the cavity 120.

In the embodiments shown in Figures 5 and 6, the mesh layer(s) 132 are optional. In alternative embodiments (not shown) a spacer or spacers are present in place of the mesh layers in the first flow pathway, or alternatively, the first flow pathway is void from any spacer or mesh.

Additional requirements for the envelope include an efficient distribution of the vacuum across the entire surface area of the membrane, efficient connections of the vacuum to the envelope to avoid unnecessary pressure drop at the connection side, and effective seals between the membrane and the frame to avoid leaks where air may get introduced to the vacuum side and reduce performance.

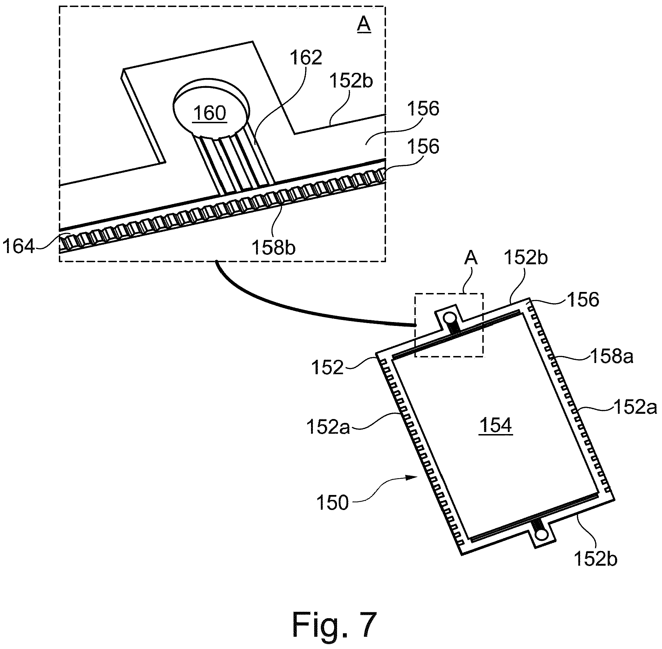

Figure 7 shows a perspective view of a housing portion 150 of an envelope in accordance with the invention. The housing portion, or frame 150 has a perimeter portion 152 and a wall portion 154. An envelope is formed by sandwiching the upper faces 156 (in the orientation of the Figure) of the perimeter portions of two such housing portions 150 together, to define a cavity between the wall portions 154 and the perimeter portions 152, and such that the perimeter portions 152 of each of two housing portions 150 together define a peripheral portion 112 of the envelope.

The wall portion 154 is recessed in relation to the perimeter portion 152. To form an envelope, a mesh (such as the mesh supports 130, 132 discussed above) is inset into the recess of each housing portion, overlaid by a membranous partition as disclosed herein, a spacer (such as an additional mesh) positioned on the membranous partition of one or both the housing portions, and the housing portions sealed to one another so as to form a peripheral seal between the housing portions and around the periphery of the membranous partitions.

The sides 152a and ends 152b of the peripheral portion 152 are each provided with an array of indents 158a, 158b from the upper faces 156. When the housing portions 150 are sandwiched together, the indents define channels that form part of the respective first and second flow pathways. As shown in the expanded view of the region A, the housing portion 150 may also include channels 162, 164 and a port 160, which in use may be an inlet port to distribute feed gas or a purge gas, an outlet port to facilitate flow of a retentate gas or a permeate gas and/or to distribute a vacuum, as the case may be.

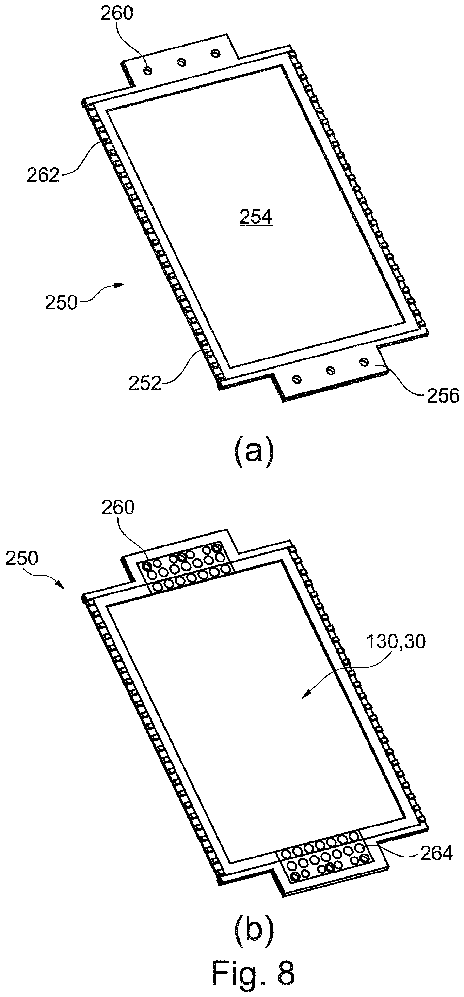

Figure 8(a) shows an alternative housing portion 250. Features in common with the housing portion 150 are provided with like reference numerals, incremented by 100. The indents 262 into the upper face 256 of the peripheral portion 252 in an assembled envelope form apertures or channels that communication with a first flow pathway. As shown in the partly assembled view of Figure 8(b), when a mesh 130 and membranous partition 30 are set into the recess, a moulded polypropylene divider 264 is positioned over the upper face 256 and defines a part of the second flow pathway communicating with the ports 260.

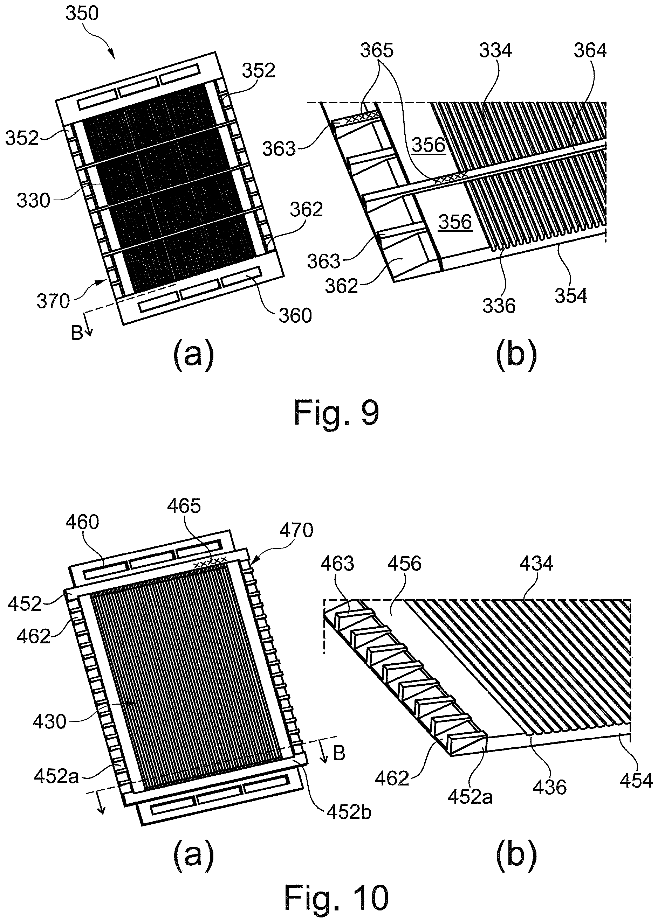

Figures 9(a) and 9(b) show perspective and perspective close up views of another housing portion 350. The end portion marked B in Figure 9(a) is omitted from the close up view of Figure 9(b), so that the configuration of the support structure can be more clearly seen.

Ramped indents 362 are defined between raised edge formations 363 and lateral ridges 364 of side portions 352 of the housing portion 350. The indents 362 are arrayed along an edge potion 352 of the housing portion 360, and extend to upper support faces 356. A proportion (in the embodiment shown every one in three) edge formations extends to form a lateral ridge 364. Each lateral ridge 364 extends to an edge portion on an opposite edge of the housing portion 350. The side portions 352, comprising the ramped indents 362, raised edge formations 363 and the lateral ridges 364 are formed of a single assembly 370.

Extending from and co-moulded with the wall portion 354 is a support structure, indicated generally as 330. The support structure includes support formations in the form of elongate ribs 334 defining channels 336 therebetween, generally as described above with reference to Figure 6. When the envelope is assembled and the assembly 370 placed over the wall portion, the channels 336 extend under the lateral ridges 364.

The upper support faces 356 are coplanar with upper (in the orientation of the figure) supporting faces of the ribs 334, but recessed in relation to the upper faces 365 of the side portions (regions of which are shown with cross hatching for illustrative purposes).

When a membranous partition is positioned across the support structure 330 and across the supporting faces 356, a part of the first flow pathway is defined between the first face of the membranous partition and the support structure 330.

Two such housing portions can be sandwiched together and the upper faces 365 bonded to one another. A part of the second flow pathway is thereby defined between the ramped indents, the remaining parts of the support surfaces 356, and the second surfaces of the respective membranous partitions (not shown). Optionally, a spacer between the opposed membranes can be omitted, where the membranes are bonded to the support structures 330.

A further embodiment of a housing portion is shown in Figure 10(a). A detailed view is shown in Figure 10(b), again with the end portion B omitted. Features in common with the embodiment of Figure 9 are provided with like reference numerals, incremented by 100.

The housing portion 450 has a wall portion 454 coupled to an assembly 470 having a peripheral portion 452 having upper faces 465. Ramped indents 462 are defined between raised edge formations 463 along the side portion 452a of the peripheral portion 452. The indents 462 extend to upper support faces 456.

Extending from and co-moulded with the wall portion 454 is a support structure, indicated generally as 430. The support structure includes support formations in the form of elongate ribs 434 defining channels 436 therebetween, generally as described above with reference to Figure 6. When the wall portion 454 and assembly 470 are couped together as shown, the channels 436 extend under the end portion 452b.

The upper support faces 456 are coplanar with upper (in the orientation of the figure) supporting faces of the ribs 434, but recessed in relation to the upper faces 365.

Analogous to the embodiment of Figure 9, when a membranous partition is positioned across the support structure 430 and partly across each of the supporting faces 456, a part of the first flow pathway is defined by the channels 436 between the first face of the membranous partition and the support structure 430, and the channels in turn extend to communicate with the port 460.

Two such housing portions can be sandwiched together and the upper faces 465 bonded to one another. A part of the second flow pathway is thereby defined between the ramped indents 462, the remaining parts of the support surfaces 356, and the second surfaces of the respective membranous partitions (not shown).

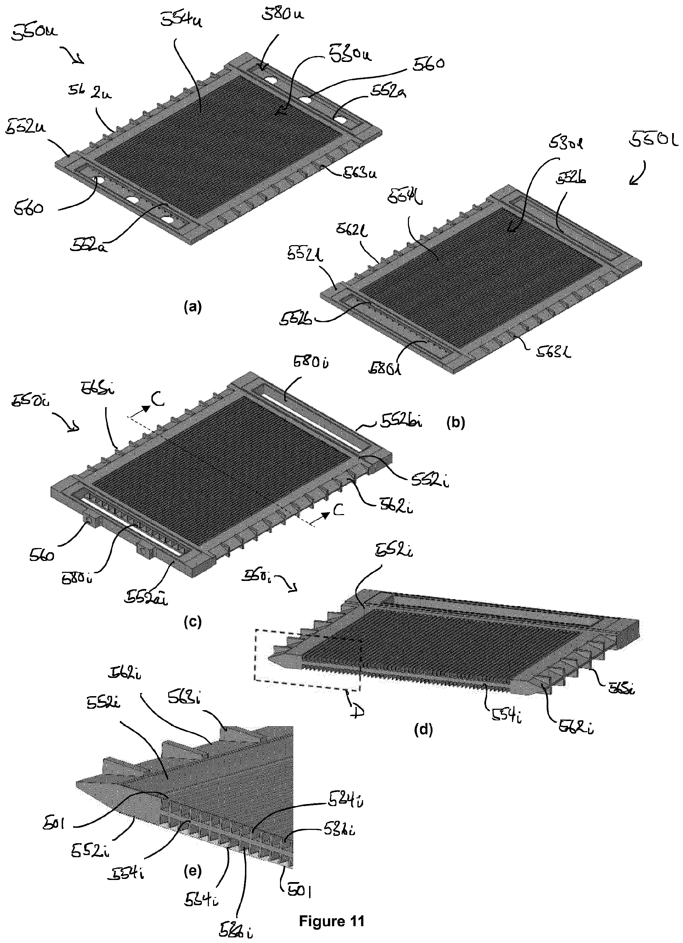

Figures 11(a) and (b) shows a perspective view of the end housing portions of a cassette in accordance with an embodiment. Upper end portion 550u and lower end portion 550l are configured in generally the same way as the housing portion 450 described above.

Each of the end housing portions has a respective peripheral portion 552u, 552l and wall portion 554u, 554l. There are ramped indents 562u, 562l defined between raised edge formations 563u, 563l along the sides of the peripheral portions.

Extending from and co-moulded with the wall portions 554u, 554l are support structures, indicated generally as 530u, 530l. Each support structure includes support formations in the form of elongate ribs defining channels therebetween, generally as described above with reference to Figure 6. The channels extend under the ends of the wall portions 552a,b, to manifold spaces 580u, 580l. The manifold space 580u of the end housing portion 550u is provided with inlet and outlet ports 560 (in the embodiment shown, inlets ports for a purge gas and outlets for a permeate).

When the peripheral portions 552u, 552l are couped together, an envelope may be formed. However, the end housing portions 550u, 550l are intended to form part of a cassette, as discussed further, below.

Figure 11(c) shows a perspective view of an intermediate housing portion 550i. A perspective view of a cross section of the intermediate housing portion 550i through C is shown in Figure 11(d) and a closeup view of region D thereof is shown in Figure 11(e).

The intermediate housing portion 550i is two-sided and the upper face (visible in the orientation shown in the figure) is identical to the lower face (not shown). Each face has a peripheral portion 552i and share a common wall portion 554i that defines channels 536i and ribs 534i (support structures) therebetween and on each face thereof.

The channels extend under the ends of the wall portions 552ai, 552bi to manifold spaces 580i. The manifold space 580i at one end of the housing portion 550i is provided with optional inlet ports 560 (in the embodiment shown, inlets for a purge gas).

There are ramped indents 562i defined between raised edge formations 563i along the sides of the peripheral portions, on both faces of the intermediate housing portion 550i.

As illustrated in Figure 11(e) in relation to the intermediate housing portion 550i, a membranous partition 501 as disclosed herein can be positioned against the support structure (ribs 534i) and sealed around the peripheral portion 552i.

When the peripheral portions 552i are couped to the peripheral portion of another intermediate housing portion 550i or the peripheral portion 552u, 552l of an end housing portion 550u, 550l, an envelope may be together formed between such adjacent housing portions 550u, 550i, 550l.

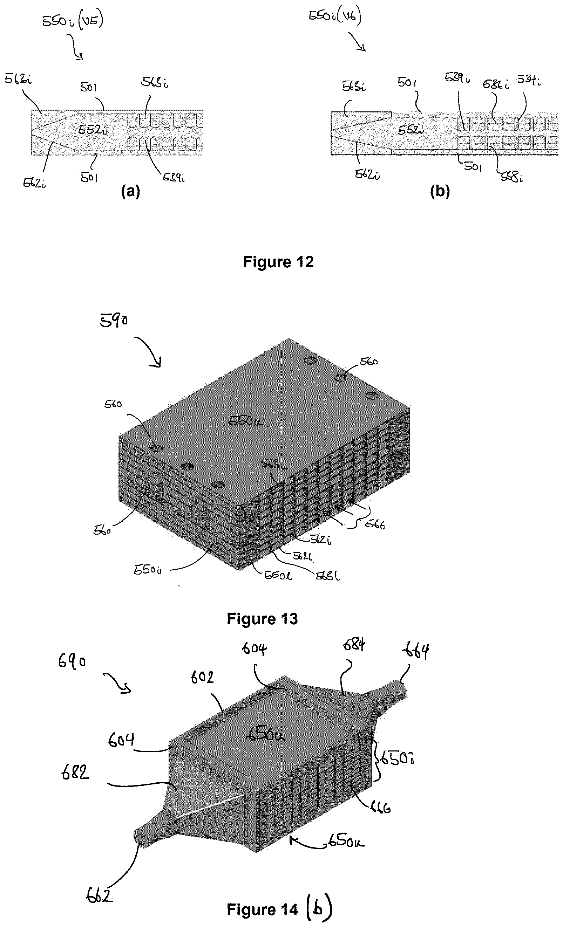

The width, depth and profile of the channels can be selected for a particular purpose. A cassette comprising multiple envelopes (referred to as version 5, or "V5") has been tested having channels of depth 2.6 mm with a rounded profile as illustrated in Figure. 12(a), width 2.0 mm and with ribs of width 0.5 mm, resulting in a thickness 9.76 mm. Cassettes comprising multiple envelopes (referred to as "V6" and "V7") have been tested having channels of depth 2.1 mm with a flattened profile as illustrated in Figure. 12(b), width 2.0 mm and with ribs of width 0.5 mm, resulting in a 7.0 mm. A cassette comprising multiple envelopes (referred to as "V8") has been tested having channels of depth 1.1 mm with a flattened profile as illustrated in Figure. 12(b), width 2.0 mm and with ribs of width 0.5 mm, resulting in a thickness 4.1 mm.

Figure 12(a) shows a cross sectional view of a V5 intermediate housing portion 550i having channels 536i with rounded bases 539i. Figure 12(b) shows a cross sectional view of a V5 intermediate housing portion 550i having channels 536i with flattened bases 539i that transition smoothly to the sides 538i of the ribs 534i.

Figure 13 shows a cassette 590 formed from end housing portions 550u, 550l and nine intermediate housing portions 550i, with membranous partitions therebetween. In the embodiment shown, housing portions with each of two channel depths were used to assemble the cassette 590; the end plates and the adjacent intermediate housing portions 550i provided with ports 560 being of V5 configuration and the remaining intermediate housing portions 550i being of thinner V6 configuration.

The manifold spaces 580u, 580i, 580l together define purge gas and permeate gas manifolds (not visible in the figure) that communicate with second flow pathways to respective second faces of the membranous partitions. The openings 566 (defined between the ramps 562u,i,l and edge formations 563u,i,l) are inlets and outlets to the first flow pathways. The cassette 590 has a cross flow arrangement of the first and second flow pathways.

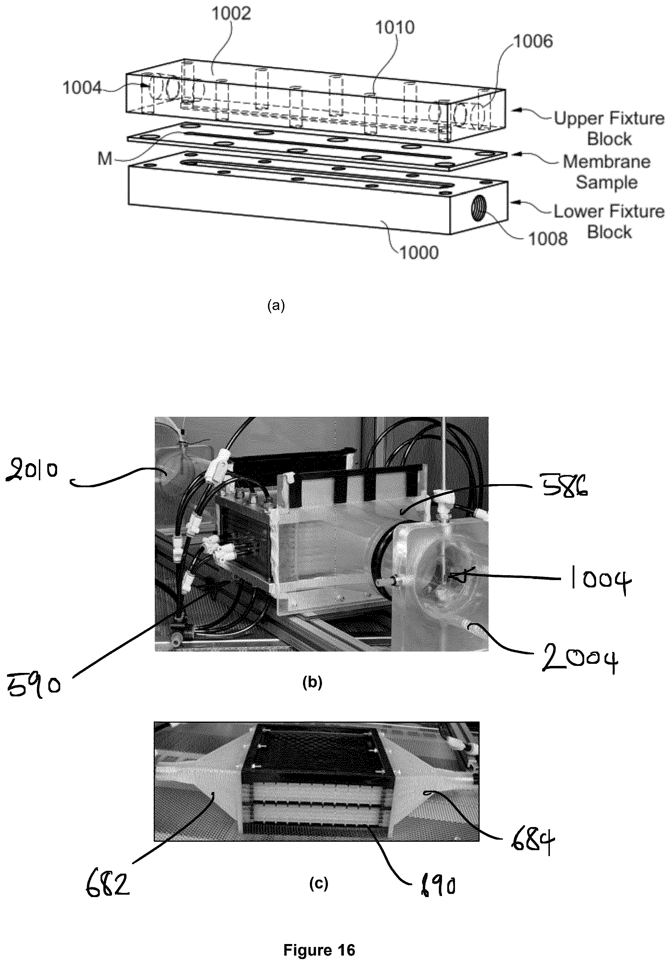

In use, and as described with reference to Figure 16(b), feed gas and retentate gas manifolds can be connected to the cassette housing over the openings 566.

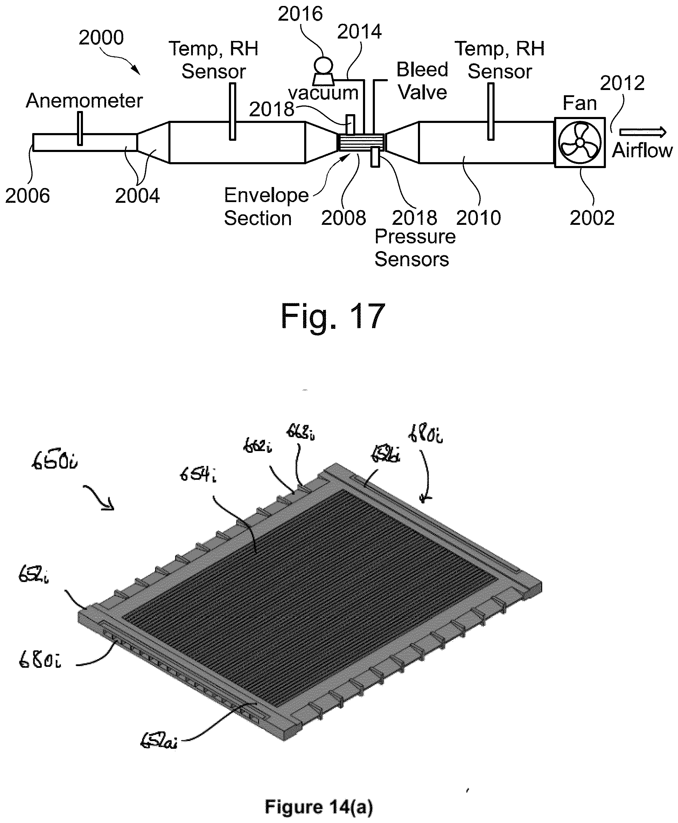

An alternative intermediate housing portion 650i is shown in Figure 14(a). Features in common with the housing portion 550i are provided with like reference numerals incremented by 100. Each face has a peripheral portion 652i and share a common wall portion 654i that defines channels and ribs therebetween and on each face thereof.

The channels extend under the ends of the wall portions 652ai, 652bi to inlets/outlets 680i to the first or second flow pathway in use.

There are ramped indents 662i defined between raised edge formations 663i along the sides of the peripheral portions, on both faces of the intermediate housing portion 650i.

Figure 14(b) shows a cassette 690 having end plates 650u that are provided with an outer lip 602 for connecting manifolds to the cassette 690, via bolts (not shown) through holes 604. Nine of the intermediate housing portions 650i are stacked together between the end plates 650u. The inlets and outlets 680i are covered by inlet (purge gas) and outlet (permeate gas) manifolds 682, 684 having a respective inlet port 662 and outlet port 664, in the embodiment shown for a purge gas and permeate gas, respectively (i.e. communicating with the second flow pathway). It will be understood that the manifolds could alternatively be used for feed and retentate gasses and the first flow pathway. The remaining sides of the housing of the cassette 690 include openings (inlets/outlets) 666 to the first flow pathway of each of the envelopes in the cassette.

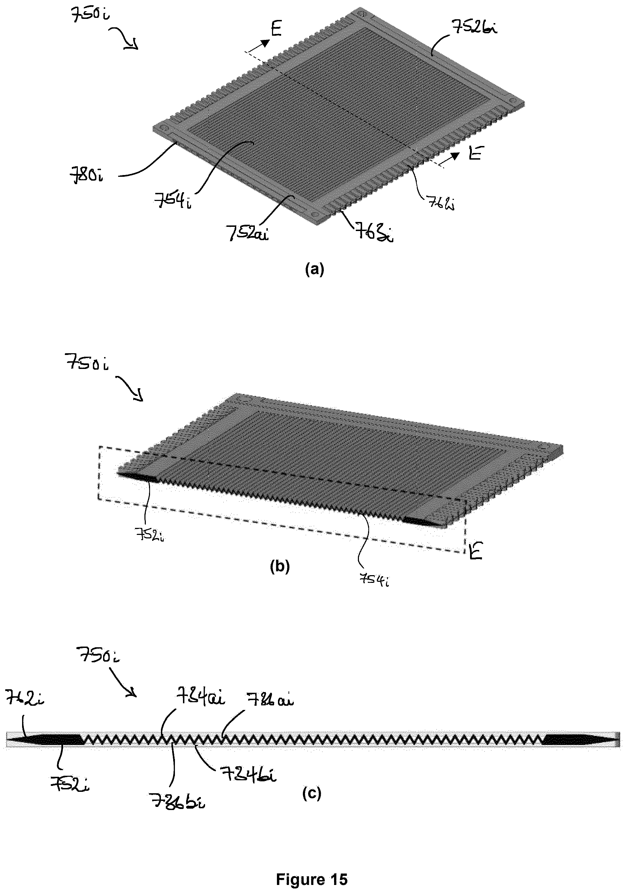

Figures 15(a)-(c) show another intermediate housing portion 750i. Features in common with intermediate housing portion 650i are provided with like reference numerals, incremented by 100.

Similarly, each face has a peripheral portion 752i and share a common wall portion 754i that defines channels and ribs therebetween and on each face thereof.

The channels extend under the ends of the wall portions 752ai, 752bi to inlets/outlets 780i to the first or second flow pathway in use.

There are indents 762i defined between raised edge formations 763i along the sides of the peripheral portions, on both faces of the intermediate housing portion 650i, which will together define inlets/outlets to the other of the first or second flow pathways when assembled into a cassette in the manner generally as discussed above.

The intermediate housing portion 750i differs in that the wall portion 754i is corrugated, as seen in the cross sectional view of Figure 15(b), through E, and the end view of the cross section of Figure 15(c). The peaks of the corrugations 734ai, 734bi function as a support formation, and define channels 736ai, 736bi therebetween. The peaks of the corrugations 734ai on one face of the wall portion 754i correspond to the bases of channels 763bi on the other face.

The corrugations can be any suitable shape, with rounded or squared off peaks and troughs. Other configurations such as rounded (e.g. sinusoidal) corrugations, or a "square wave" cross sectional profile may be used, optionally with smoothed transitions between the flattened surfaces.

In the embodiment shown, peak to peak spacing of the corrugations - defining the width of the channels 736ai, 736bi - is 3.0 mm. "Peak to valley" thickness, i.e. the depth of the channels 736ai, 736bi is 1.8 mm, and total thickness is 4.0 mm.

## Experimental

Experiments were conducted to demonstrate moisture removal from an airstream, using test envelopes V1-V4 mounted in a test setup as shown in Figures 16(a) and 17. Experiments were also conducted to demonstrate moisture removal from an airstream, using cassettes 590 (formed from a mixture housing portions with a mixture of V5 and V6 channels and ribs as disclosed above) and 690 (formed from housing portions with V7 channels and ribs).

The test setup was located in a temperature and humidity controlled room (e.g. 22°C, 50%RH) or placed in a large environmental chamber (to facilitate testing in a range of controlled conditions of temperature and relative humidity (RH).

The test setup 2000 consists of an adjustable blower/fan 2002, ducting 2004 between an inlet 2006 and an envelope section 2008 and ducting 2010 between the envelope section or cassette and the fan 2002 at an outlet 2012.

The test envelope is mounted in the envelope section with the feed gas inlet 1004 connected to the ducting 2004 and the retentate outlet 1006 connected to the ducting 2010. The vacuum port 1008 is connected to a vacuum line 2014 and vacuum pump 2016.

When a cassette is tested, the feed gas is ducted via ducting 2004 to an inlet of a feed gas manifold 586, and the retentate gas is ducted via an outlet of a retentate manifold (not visible in the image of Figure 16(b)) via ducting 2010.

The cassette 590 was connected to a purge gas via inlet and outlet ports 560 with tubing. The cassette 690 was connected to a purge gas via manifolds 662 and 664.

Feed gas airflow was monitored using an anemometer in the inlet ducting 2004, and both temperature and relative humidity of the feed air and retentate air was monitored. Pressure on either side of the membranes was measured using pressure sensors 2018.

The test setup produces airflows from 0 - 45 $m^3$/hr.

## Porosity

Porosity was determined in accordance with the method disclosed in US 2021/0332202, the contents of which are incorporated herein by reference.

Briefly, herein porosity is expressed as a percentage; and the porosity of a membrane is determined by subtracting the quotient of the average density of the porous polymer membrane and that of the bulk density of the polymer, from 1, then multiplying that value by 100.

For the purposes of this calculation, the bulk density of PTFE and polyethylene were taken to be 2.2 $g/cm^3$ and 0.94 $g/cm^3$, respectively.

The density of a membrane sample was calculated by dividing the mass/area of sample by its thickness.

Permeance

The moisture permeance of a membranous partition can be determined by using a standard test method (for example, ASTM E96) to determine a Water Vapour Transmission Rate at defined conditions and convert this rate into Gas Permeation Units (GPU) using the proper unit conversion.

For high moisture transfer rates, the apparatus in Figure 16(a) can be used to determine the moisture permeance of a membrane partition sample as follows. The permeance is related to the overall moisture transport rate by the formula MTR = P * A * DC(log), where MTR is the total moisture transport rate, P is the permeance, A is the active surface area of the membrane partition, and DC(log) is the log mean concentration driving force between the inlet and outlet of the test cell.

The total moisture transport rate is determined by the change in concentration between inlet and outlet by MTR = Q * (C_in - C_out), where Q is the total flow rate in the feed side, C_in is the inlet moisture concentration, and C_out is the outlet moisture concentration. Therefore, the permeance is determined by P = Q/A * (C_in - C_out) / DC(log) and can be converted into Gas Permeation Units (GPU) using proper unit conversions and accounting for the boundary resistance in the air channel.

One GPU is equal to $1.0E\text{-}06 \, cm^3(STP)/(cm^2 \, s \, cm \, Hg)$. The apparatus in Figure 16(a) was typically operated at a flow rate of 1.0 L/min at a temperature of 22C and a relative humidity close to 60% that was controlled by mixing a fully saturated air stream with a dry air stream to set the desired RH.

Envelope construction

Four test envelopes were evaluated, Version 1-Version 4.

Envelopes Versions 1 and 2 each consist of plastic housing portions, PBT mesh layers, and coated membrane applied to the front and back of the PBT mesh with pressure sensitive adhesive.

Double mesh layers are placed between the membranes to create a vacuum channel.

Each mesh layer is 0.5mm thick and the two mesh layers are installed 90 degrees from the other, resulting in a 1mm thick vacuum channel.

Version 1 used a housing portion as shown in Fig. 7.

Version 2 used a housing portion or frame as shown in Figs. 8(a) and (b) and included had a split envelope design with a centre divider between two vacuum volumes. Each vacuum side had a two layer mesh construction resulting in a 1 mm vacuum channel on each side (2mm total). The Version 2 envelope also features a more open vacuum distribution connection than Version 1.

The Version 3 and 4 envelopes did not include any mesh, and used housing portions as depicted in Figs. 9 and 10, respectively.

The housing portions of each envelope are of sandwich construction, with foam gaskets between.

The membranes of envelope version three (V3) features 54% open vacuum channel area with engineered elongate ribs and channels for membrane support. The channels are 1mm deep. It also contains an even more vacuum distribution than versions 1 or 2.

Envelope Version 4 features an 80% open area of the membrane, by using fewer and broader ribs that are 0.5 mm deep. The vacuum distribution is similar to Version 3.

Cassettes were constructed as described above with reference to Figures 11-14.

The cassette 590 (hereinafter referred to as the "V5/V6 cassette") included Envelope Version 5 end housing portions having inlet and outlet ports from the manifolds, with 2.63mm deep x 2mm wide channels, 0.5mm wide ribs. Nine intermediate housing portions were used, including two Envelope Version 5 intermediate housing portions with an overall thickness of 9.76mm each provided with purge gas inlet ports, and seven Envelope Version 6 intermediate housing portions above and below, with channel dimensions 2.13 mm deep x 2 mm wide channels, 0.5 mm wide ribs, giving an overall 7 mm thickness.

A cassette configured as described above in relation to cassette 690 was made from each of Envelope Version 7 and Envelope Version 8 housing portions. Both the "V7 cassette" and the "V8 cassette" included end housing portions and a stack of nine intermediate housing portions therebetween.

The V7 housing portions have channels 2.13 mm deep x 2 mm wide and 0.5 mm wide ribs, giving a 7 mm overall thickness.

The V8 housing portions have channels 1.13 mm deep x 2 mm wide and 0.5 mm wide ribs, giving a 4.1 mm overall thickness.

Membranes

Porous polyethylene membranes were produced generally in accordance with teachings of US 5248461, US 4873034, US 5051183 and US 6566012 (each of which are incorporated herein by reference).

*Membrane (1)*

The base membrane, with a porosity of 66%, was Mayer rod coated with a hydrophilic polyurethane based coating and finished at 110 Celsius. The partially imbibed membrane (Figure 2b) used in envelope Version 1 is a coated single layer ePE with a thickness of approximately 12.5 microns and 0.9 gsm polyurethane coating. The resulting moisture removal efficiency (RE), measured using the test fixture in Figure 11, is 26% without purge gas, which translates to a permeance of 13,500 GPU.

*Membrane (2)*

All other envelope versions V2 through V4 incorporated a two layer construction (Figure 2c) consisting of two 9 micron, 70% porous, ePE layers with hydrophilic polyurethane coating in between. One membrane layer is partially imbibed using the same process described for the single layer ePE, and another identical membrane layer is placed on top before drying. The resulting composite has a thickness of 16 microns and a 0.5 gsm polyurethane coating. The resulting removal efficiency is 28% without purge gas, which translates to a permeance of 15,000 GPU.

*Membrane (3)*

An expanded polytetrafluoroethylene (ePTFE) membrane was made generally in accordance with the teachings of US 3,953,566. The microporous ePTFE membrane, having a thickness of about 28 $\mu$m and a porosity of about 85%, was gravure coated with 6.5 gsm of a hydrophilic polyurethane pre-polymer mixture and allowed to moisture cure. The resulting partially imbibed composite membrane had a mass per area of 16 gsm. The resulting moisture removal efficiency, measured using the test fixture in Figure 16(a), is 22% without purge gas, which translates to a permeance of 10,700 GPU.

Membranous partition testing

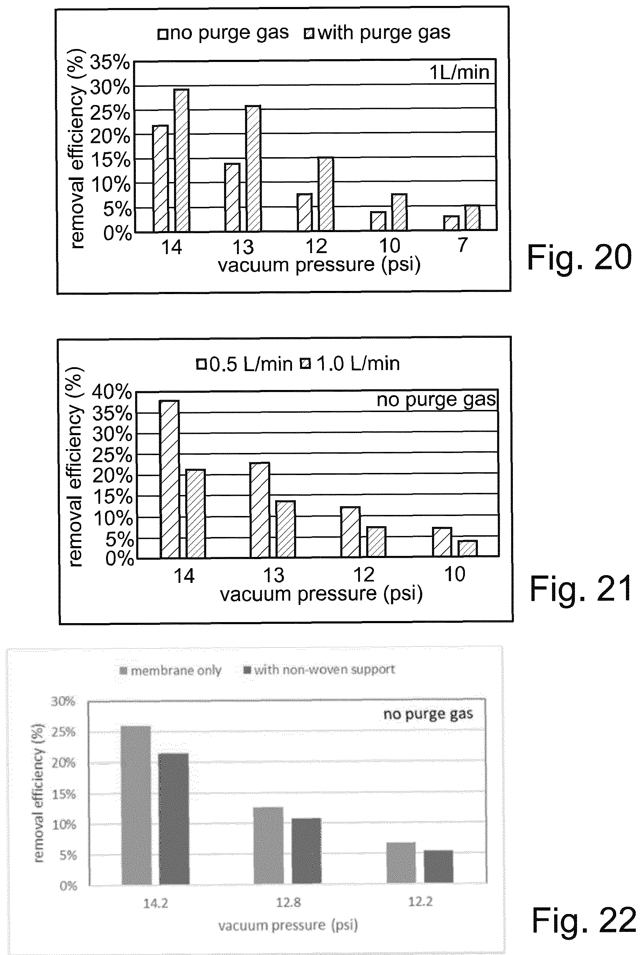

A test fixture was used to evaluate test membranes and barriers. An exploded view is shown in Figure 16(a). The test fixture includes upper and lower fixture blocks 1000, 1002 bolted together and sandwiching a test membrane M. The upper fixture includes a feed gas inlet 1004, a retentate outlet 1006 and (not visible in the figure) the lower face is profiled to provide a first flow pathway communicating with the inlet and outlet 1004, 1006 when the test envelope is assembled. The lower fixture block includes a vacuum port 1008 and is similarly profiled so as to provide a second flow pathway. The upper and lower fixture blocks 1000, 1002 are bolted together and sealed around the interface using a suitable sealant.
Each membrane has an active membrane area of 4mm x 150mm. The vacuum side of each membrane is supported by a PBT mesh (Delnet model No. NO2044, obtained from SWM International, Alpharetta, GA, USA). In some examples, the membrane was additionally supported with a non-woven layer (obtained from Fiberweb, Evansville, IN USA, Model No. M2275) in between the mesh and the membrane to simulate the conventional membrane construction.
Results are shown in Figures 20-22.

Results - V1-V4 envelopes

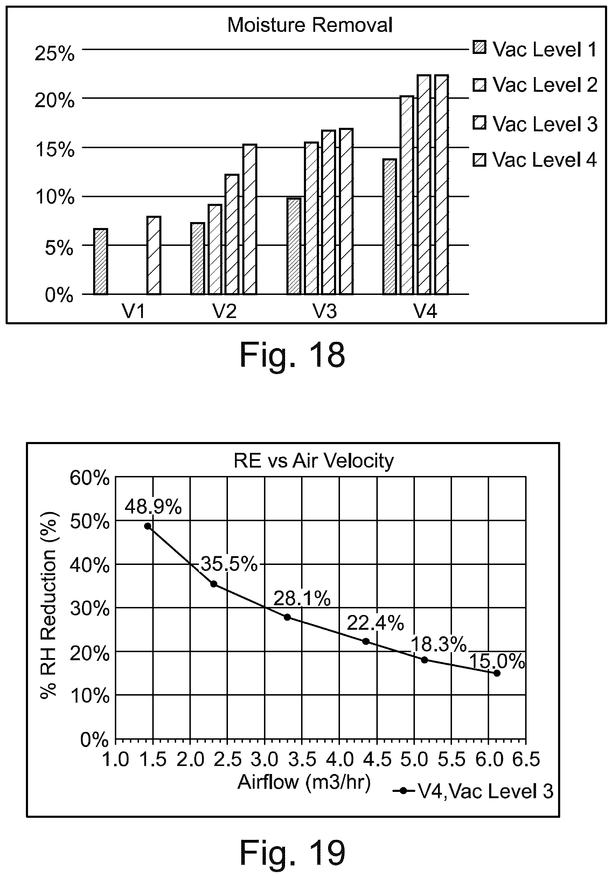

Each envelope version was run at four vacuum/purge gas conditions at a flow rate of 4.3 m³/hr. At vacuum level 1, vacuum is applied from one side of the envelope with the opposite purge gas port closed. For vacuum levels 2-4 the opposite port valve is opened progressively more to allow dilution of the vacuum channel with room air (22°C, 50%RH). Opening the purge gas valve port increases the flow and increases the vacuum pressure. Performance and vacuum level/ purge gas set point is provided in Table 1 and Figures 18 and 19.

Table 1: Moisture Removal Efficiency Data at 4.3 m³/hr

| Version | Vac Level 1 | | Vac Level 2 | |
| | RE% | Pressure (measured at purge gas port) and purge gas Flow | RE% | Pressure (measured at purge gas port) and purge gas Flow |
|---|---|---|---|---|
| V1 | 6.7% | no purge gas, 14.3 psi | no data | Not run |
| V2 | 7.3% | no purge gas, 145 psi | 9.1% | purge gas to 14 2 psi (flow not measured) |
| V3 | 9.8% | no purge gas, 147 psi | 15.5% | purge gas to 14 2 psi (500cc) |
| V4 | 13.8% | no purge gas, 147 psi | 20.2% | purge gas to 14 2 psi (500cc) |

(continued)

| Version | RE% | Vac Level 3 | | RE% | Vac Level 4 |
| | | Pressure (measured at purge gas port) and purge gas Flow | | | Pressure (measured at bleed port) and purge gas Flow |
|---|---|---|---|---|---|
| V1 | no data | Not run | | 7.8% | purge gas to 12 7 psi (flow not measured) |
| V2 | 12.2% | purge gas to 13 7 psi (flow not measured) | | 15.3% | purge gas to 12 7 psi (flow not measured) |
| V3 | 16.7% | purge gas to 13 9 psi (1000cc) | | 16.9% | purge gas to 13 0 psi (1500cc) |
| V4 | 22.4% | purge gas to 13 9 psi (1000cc) | | 22.3% | purge gas to 13 0 psi (1500cc) |

The data summarised in Figure 18 indicates that the depth of the vacuum channel, number of support ribs, as well as the vacuum distribution are critical for removal efficiency performance.

Figure 19 demonstrates the strong effect of feed velocity on the moisture removal efficiency performance, for the Version 4 envelope at vacuum level 3. A similar trend could be expected for other embodiments.

Figure 20 demonstrates the impact of purge at five different pressure levels for membrane (3) comparing no lab air purge with lab air purge at a feed flow rate of 1 L/min using the apparatus in Figure 16(a). The lab air purge has a significant effect at each of the tested vacuum pressures.

Figure 21 demonstrates the impact of feed flow rate for membrane (3) when no air purge is used for various vacuum levels. The data indicates that the feed flow rate and vacuum level both significantly influence the removal performance of the membrane.

Despite providing more mechanical support, the additional non-woven layer used to generate the data in Figure 22 for membrane (1) reduces the performance significantly; as illustrated by the significant reduction in moisture removal efficiency for comparable conditions.

Vehicle ventilation system example operating modes

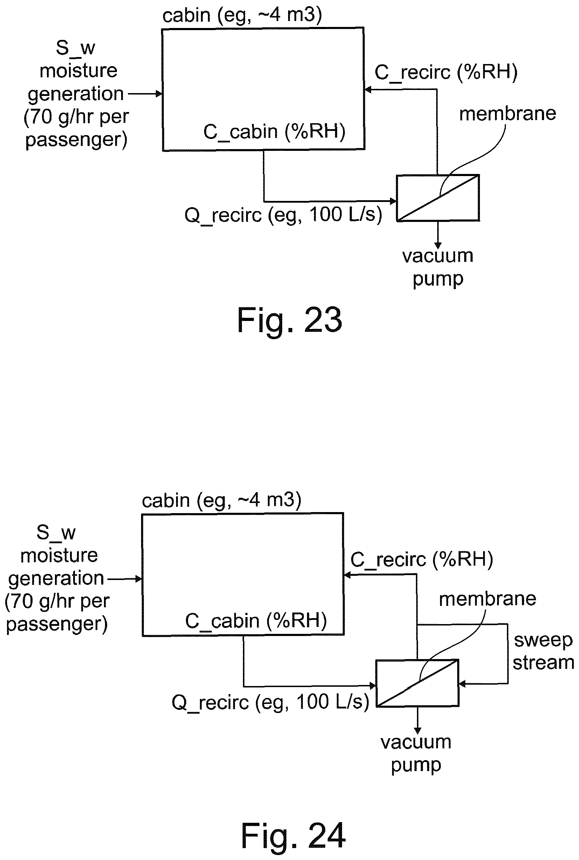

It is envisaged that the membranes and envelopes disclosed herein can be used in vehicle ventilation or HVAC systems. Typical operating modes are described below with reference to Figures 23-25.

*Winter operation*

During recirculation of air to avoid heating of the cold outside air, a certain amount of moisture has to be removed that is generated by the passengers in the cabin (for example of typically around 4 $m^3$ volume). A typical moisture generation rate of an adult passenger is on the order of 70 g/h. This increased moisture increases the risk of fogging of the windows, which reduces visibility for the driver of the vehicle.

Conventional vapour compression systems or heat pumps do not work efficiently at very low temperatures due to freezing risks of the condensed moisture or the boiling point of the used coolant. A membrane dehumidification device can be utilized to remove the moisture from the cabin air in a recirculation stream. The larger the amount of the recirculation stream, the lower the amount of fresh (and cold air) is used, which leads to energy savings due to a reduced heating load on the PTC heaters, as otherwise required where no waste heat is available, as for example in EVs.

The moisture content of cold air is very low and in order to remove the moisture with a membrane dehumidification device, a very low pressure would be necessary in the configuration shown in Fig. 23.

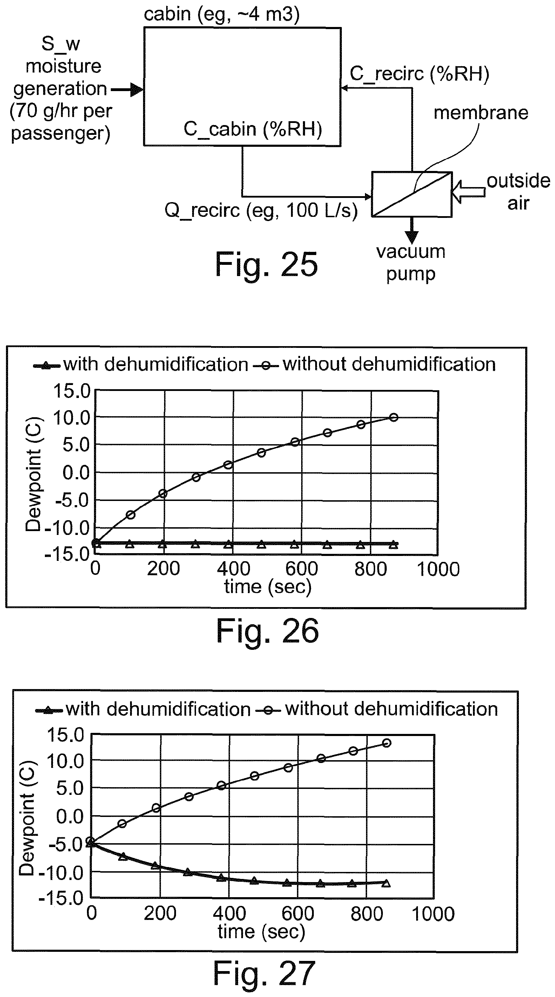

For example, at -20°C, the vapour pressure of water is only 0.13 kPa and the vacuum pump must be below this threshold to remove moisture with a membrane device. Nonetheless, in vehicle applications, and in particular EV applications, the system and operating mode illustrated in Figure 23 is a new and more efficient approach to dehumidifying vehicle cabin air, in the absence of a waste heat source such as an ICE in particular. An additional and related operating mode is depicted in Figure 25 and discussed below.

An alternative to a very low vacuum mode of Figure 23, is the utilization of a sweep stream with low humidity. A sweep stream is typically a part of the retentate stream that leaves the membrane module (also referred to herein as a dehumidification unit) and has a lower humidity than the incoming stream as shown in Fig. 24. However, in the recirculation application, this mode is less desirable as the amount of sweep gas has to be applied back to the cabin with fresh and cold air.

Another additional and novel operation mode of a vehicle ventilation system using membrane dehumidification, and compatible with the improved membranes and envelopes disclosed herein is illustrated in Figure 25. The outside air with very low humidity may be utilized instead of a sweep stream, together with, in some modes, application of a vacuum to the second flow pathway. Moreover, improved permeation rate and/or diffusion from the second face of the membrane barrier can reduce or eliminates the need to heat the outside air (purge air). Therefore, all air in the recirculation stream is provided back to the cabin, without the overall system efficiency losses normally associated with a sweep stream. Combining both outside air as the purge air with a vacuum will lead to the most efficient operation of the membrane device and process in some operating conditions.

Optimizing the energy usage of the system will be a trade-off between energy used, outside air requirements, pressure drop through the device, and membrane area - depending on the particular conditions of use.

In general terms, the utilized energy of the ventilation system depends on the amount of vacuum used (if any), the amount of purge gas used, and the amount of air permeating through the membrane.

EXAMPLE CALCULATIONS

(A) Example calculations of a vehicle ventilation system including a membrane dehumidification unit are shown below, for example flow rates over and pressure drops across a dehumidification membrane. The size of the membrane dehumidification unit is limited by the space available on a vehicle and is estimated to be 200 x 200 x 100 mm for this example. The number of membrane envelopes is determined by the desired feed side pressure drop, which is estimated to be 80 Pa and leads to 100 envelopes for a recirculation rate of 5 m3/min. The performance is calculated using the approach described earlier using a permeance of 14,300 GPU with no purge rate. The required energy for the vacuum pump based on the embodiment of Figure 18 and the coefficient of performance (COP) were estimated based on the methodology described by Claridge et al., Int. J. Refrig. 101 (2019), 211-217.

1. Summer operation

During summer operation, one has to consider the initial cool down phase, for example from 40C and 40% RH and a steady state operation at 22C and 50% RH. In both cases, the energy savings are realized by calculating the required vacuum pump energy and the effective COP.

Cool Down

At 5 m3/min and an inlet of 40C and 40% RH, the outlet humidity for the described membrane dehumidification unit is calculated to be 25% RH. The water removal rate is 2300 g/hr, the vacuum pump requires 650W of energy and the COP is 2.35.

Steady State

At 5 m3/min and an inlet of 22C and 50% RH, the outlet humidity is 33% RH. The water removal rate is 990 g/hr, the vacuum pump requires 270 W of energy and the COP is 2.47.
(RH = relative humidity, COP = Coefficient of Performance)

These values compare to conventional vehicle HVAC COP values of around 2-3.

2. Winter operation

During winter operation, one has to consider the initial warm up phase, for example from -10C and 80% RH and a steady state operation at 22C and 50% RH. In both cases, the energy savings are realized by comparing the required heat to warm up outside air from -10C to 30C compared to heating up the recirculation stream from 22C to 30C and the required vacuum pump energy.

Warm up:

At 5 m3/min and an inlet of -10C and 80% RH, the outlet humidity is 60% RH. The water removal rate is 149 g/hr, the vacuum pump requires 49W of energy and the COP is 2.12. The heating energy required for heating the outside air to 30C is 4.6 kW while the energy required for heating the recirc stream to 30C is 0.9 kW.

Steady State:

At 5 m$^3$/min and an inlet of 22C and 50% RH, the outlet humidity is 33% RH. The water removal rate is 990 g/hr, the vacuum pump requires 270 W of energy and the COP is 2.47. The heating energy required for heating outside air to 30C is 4.6 kW, while the energy required for heating the recirc stream to 30C is 0.9 kW

(B) Example calculations for maintaining the humidity/Dew Point below a threshold value to prevent fogging of the windows

Calculations based on the embodiments of Figures 23-25, with the following conditions: the cabin volume is estimated as 4 m3, it is assumed that there are two passengers in the cabin who generate 140 g/hr of moisture, and the recirculation flow rate is 5 m3/min. The size of the membrane dehumidification unit is 200 x 200 x 100 mm with 100 envelopes, which leads to a pressure drop of 80 Pa at a recirculation rate of 5 m3/min.

A simple mass balance for the cabin leads to this differential equation for the moisture content of the cabin over time:

$$V\_cabin * d/dt\ C\_cabin = Q\_recirc * (C\_recirc - C\_cabin) + S\_w$$

Where V_cabin is the volume of the cabin, C_cabin is the moisture content of the cabin, C_recirc is the moisture content of the returning recirculation stream, Q_recirc is the recirculation rate, and S_w is the moisture generation rate. Using the definition of the removal efficiency (RE) of the membrane dehumidification unit as RE = 1 - (C_recirc / C_cabin), the steady state cabin moisture content can be determined by C_cabin = S_w / Q_recirc / RE assuming a constant removal efficiency, which can be used to design the system for the desired cabin moisture content.

For winter operation, it is desired to prevent fogging of the windows, which occurs when the Dewpoint of the cabin air is higher than the temperature of the windows. A typical example is illustrated by calculating the Dewpoint of the cabin air over time for two cases. The result for the initial warm up of the vehicle starting at -10C and 80% RH (dewpoint -12.8C) is shown in Figure 26 for a removal efficiency of 25%. The membrane dehumidification unit is able to maintain the dewpoint close to the initial value of -12.8C.

After the initial warm-up, the cabin air is warm, for example +10C and the windows have increased in temperature, for example to -5C. Starting at a cabin air dewpoint of -5C (10C, 35% RH), the membrane dehumidification unit is able to decrease the dewpoint in the cabin to -12.8C, while operation without dehumidification would lead to fogging of the windows as shown in Figure 27.

(C) Model calculations for performance vs outside air conditions

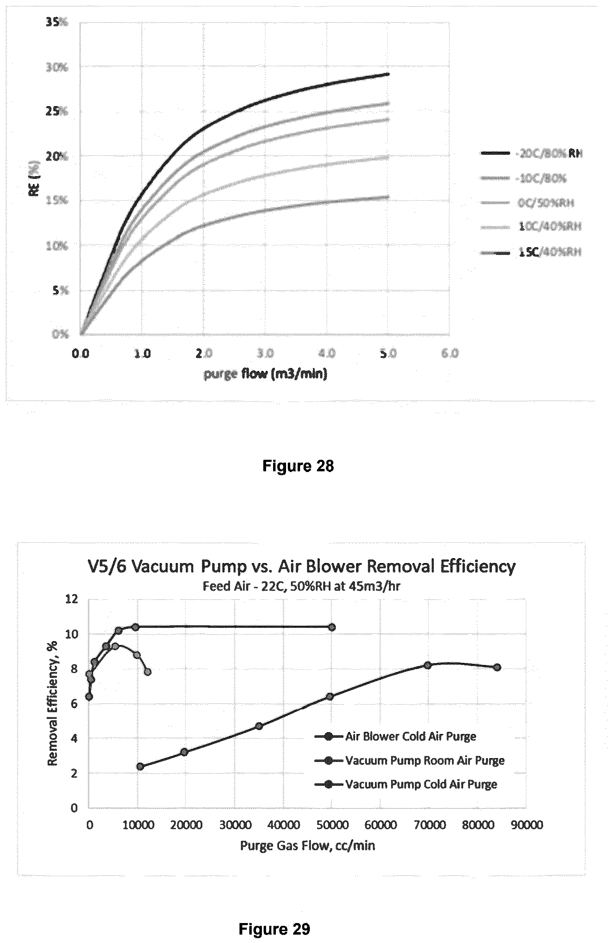

Example calculations with outside air purge of a vehicle ventilation system including a membrane dehumidification unit are shown in Figure 28, based on the embodiment of Figure 25 for example flow rates over and pressure drops across a dehumidification membrane.

The size of the membrane dehumidification unit is limited by the space available on a vehicle and is estimated to be 200 x 200 x 100 mm for this example.

The number of membrane envelopes is determined by the desired feed side pressure drop, which is estimated to be 80 Pa and leads to 100 envelopes for a recirculation rate of 5 m$^3$/min.

The performance is calculated for 22C and 50% RH inside the cabin using the approach described earlier using a permeance of 14,300 GPU with a variety of purge rates and outside air temperatures and humidities.

The calculations shown in Figure 28 indicate that for a recirculation rate of 5 m$^3$/hr at various purge conditions and flow rates, the performance of the device increases the drier the outside air is.

The purge flow rate also has a large impact on performance. In winter conditions, the performance using an outside air purge is comparable to using a high vacuum as described earlier.

3. Cassette Experimental Testing

(A) Results - V5/V6 Cassette, V7 Cassette, V8 Cassette

Experiments were conducted to demonstrate moisture removal from an airstream, using the V5/V6, V7 and V8 test cassette devices mounted in a test setup as shown in Figures 16(b), 16(c) and 17.

The test setup was located in a large environmental chamber (to facilitate testing in a range of controlled conditions of temperature and relative humidity (RH). An adjacent environmental chamber was used to provide cold air for the purge gas if required, via plastic tubing.

The test setup produces airflows from 0 - 45 m$^3$/hr. Cold air purge gas was provided at -20C.

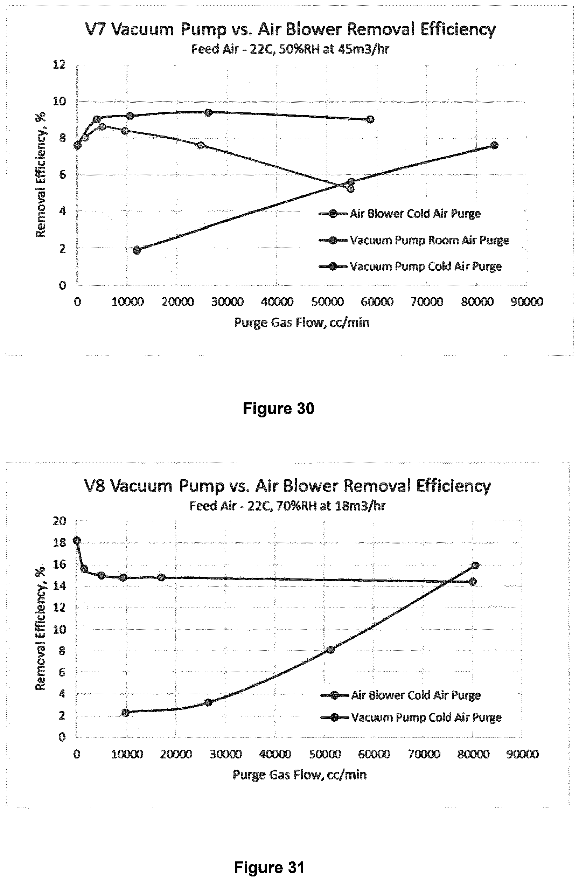

The V5/6 and V7 cassette devices were tested at 45 m$^3$/hr with a vacuum pump with both room and cold air purge gas, and separately with an air blower using only cold air purge. Results are shown in Figures 29 and 30, respectively.

The V8 cassette was tested at 18 m$^3$/hr with a vacuum pump and air blower with cold air purge gas. Results are shown in Figure 31.

Removal efficiency (%RE) was tested for all three test cassettes V5/V6, V7 and V8 under comparable conditions at 18 m³/hr and results are set out in Table 2 below:

Table 2

| Device | %RE | Moisture Removal, g/hr | Feed Flow, m3/hr | Purge Gas Flow, cc/min |
|--------|------|------------------------|------------------|------------------------|
| V5/6 | 19.4 | 47.97 | 18.2 | 78000 |
| V7 | 16.2 | 40.02 | 18.0 | 82540 |
| V8 | 15.9 | 37.83 | 17.7 | 80390 |

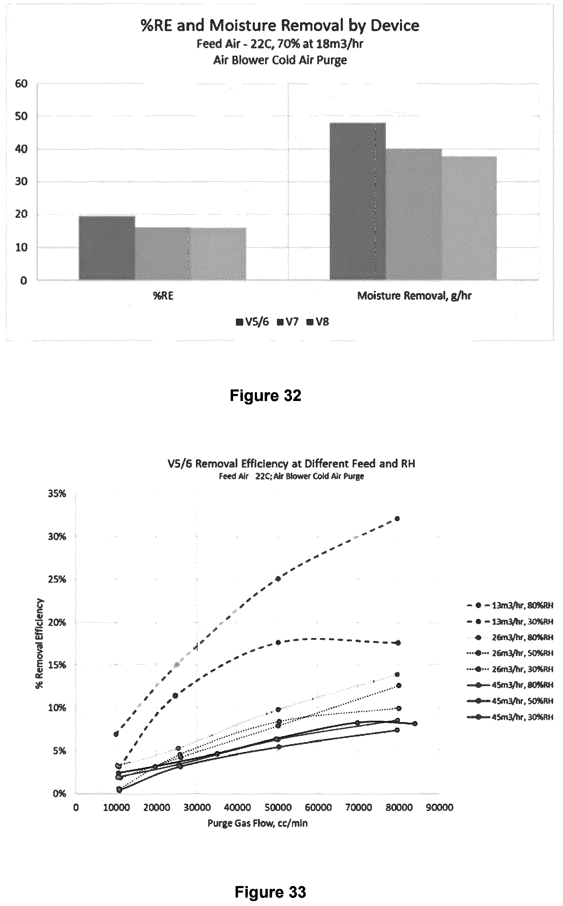

These data are also tabulated in Figure 32.

(B) Performance data (different feed RH and flow rates) with cold air blower

The V5/V6 cassette performance was tested with air blower cold air purge (-20C) at different feed flows and humidity.

Results are shown in Figure 33.

At lower feed flow rates and higher humidity, the removal efficiency was higher.

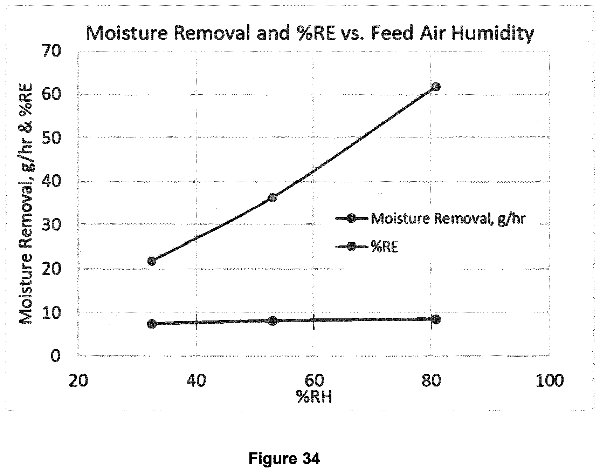

The V5/V6 cassette performance was also tested at ambient temperature (22C) at different humidity levels, at a high feed gas flow rate (45 m³/hr). Results are set out in Table 3 below, and plotted in Figure 34.

These data show that, while moisture removal efficiency remained similar at different humidity levels, the absolute moisture removal was higher at greater relative humidity.

Table 3

| Comparison of Moisture Removal and %RE at different feed air humidity levels at max purge rate (80k cc/min), 10 Envelopes, 22C Air Temp, 45m3/hr Feed Flow | | |
|---|---|---|
| RH | Moisture Removal, g/hr | %RE |
| 32.5 | 21.7 | 7.4 |
| 53 | 36.2 | 8.1 |
| 80.8 | 61.8 | 8.5 |

The above described examples embodiments are intended to be illustrative only and in no way limiting. The described embodiments are susceptible to many modifications of form, arrangement of parts, details and order of operation. The disclosure is intended to encompass all such modification within its scope, as defined by the following claims.

**Claims**

1. A dehumidifying system for a vehicle, for selectively removing water vapour from a feed gas, wherein the feed gas is vehicle cabin air;

   wherein the dehumidifying system comprises:

   a membrane separation unit, having:
   a membranous partition comprising a selectively permeable membrane, the selectively permeable membrane having a permeability to water vapour greater than a permeability for at least oxygen and nitrogen; a feed gas inlet for the cabin air and a retentate gas outlet for a retentate gas; and a permeate outlet for a permeate gas;
   a first flow pathway that communicates with a first side of a membranous partition; and a second flow pathway that communicates with a second face of the membranous partition; wherein the feed gas inlet and the retentate gas outlet communicate with the first flow pathway, and wherein the permeate outlet communicates with the second flow pathway;

ducting for supplying air from a vehicle cabin to the feed gas inlet and/or ducting for supplying air from outside of the vehicle; and
ducting for flowing the retentate gas outlet to the vehicle cabin, to circulate or recirculate retentate air to the vehicle cabin:

wherein the system is configurable to have an operating mode, wherein the operating mode comprises:

- supplying cabin air supplied along the ducting from the vehicle cabin to the feed gas inlet;
- recirculating retentate air to the vehicle cabin via ducting from the retentate outlet; and
- one or both of:

supplying outside air along the ducting for supplying air from outside of the vehicle to a purge gas inlet to the second fluid pathway;
applying a vacuum to the second flow pathway.

2. The dehumidifying system of claim 1, wherein the operating mode further comprises:
flowing a sweep stream of a minor portion of the retentate air into a purge gas inlet to the second flow pathway.

3. The dehumidifying system of claim 1 or 2, wherein the membranous partition has a permeance of at least around 10,000 GPU, 12,000 GPU or 15,000 GPU to water vapour; and/or a thickness of 0.1 $\mu$m to 100 $\mu$m, or 0.1 to 50 $\mu$m.

4. The dehumidifying system of any preceding claim, wherein the membranous partition comprises a porous polymer membrane; and a selectively permeable material having a permeability for water vapour that is higher than the permeability for nitrogen and oxygen.

5. The dehumidifying system of claim 4, wherein the porous polymer membrane is an ePP, ePE or an ePTFE membrane.

6. The dehumidifying system of claim 4 or 5, wherein the porous polymer membrane is imbibed with the selectively permeable material, through at least a part of the thickness of the porous polymer membrane, together forming a composite membrane.

7. The dehumidifying system of claim 6, wherein the membranous partition comprises two or more than two such composite membranes;

wherein each composite membrane is a partially imbibed composite membrane, and comprises a coating of the selectively permeable material on a coated face;
wherein the opposite face of the membrane is a bare face, free of the selectively permeable material; and
wherein the first and second faces of the membranous partition are defined by bare faces of each of two partially imbibed composite membranes.

8. The dehumidifying system of any preceding claim, wherein the selectively permeable material comprises a material selected from silicone material, a polyurethane material, an ionomer material, a polyvinyl material, a polyamide material, a polyimide material.

9. The dehumidifying system of any preceding claim, wherein the membrane separation unit comprises:

a housing;
the membranous partition sealed within the housing around a periphery of the membranous partition; and wherein the membranous partition comprises a porous polymer membrane and a selectively permeable material;
the housing defining, at least in part, the first flow pathway and the second flow pathway; and
the housing comprising a support arrangement directly against the first face or the second face of the membranous partition, and configured to mechanically support the membranous partition and define at least a part of the respective first or second flow pathway.

10. The dehumidifying system of claim 9, wherein the open area of the membranous partition is above around 50% of the total area of the second face.

11. The dehumidifying system of claim 9 or 10, wherein the support arrangement comprises a shaped support structure, having a plurality of support formations and a plurality of recessed formations.

12. The dehumidifying system of any one of claims 9 to 11:

wherein the housing comprises a frame having a perimeter portion and a wall portion, together defining a recess; wherein the membranous partition is set into or over the recess and sealed to the perimeter portion; and wherein the perimeter portion defines a part of the first flow pathway and/or the second flow pathway; one or one or more first apertures or channels extending through the perimeter portion, the first apertures or channels defining a part of the first flow pathway and/or one or more second channels or apertures may extending through the perimeter portion, the second apertures or channels defining a part of the second flow pathway.

13. The dehumidifying system of claim 12, wherein the housing is of sandwich construction, formed of first and second housing portions sandwiched together via respective first and second perimeter portions, the first and second perimeter portions together defining a perimeter portion of the housing, wherein a periphery of the membranous is sandwiched and sealed between the first and second housing portions.

14. A method of dehumidifying cabin air of a vehicle, comprising:
providing a membrane separation unit, having:

a membranous partition comprising a selectively permeable membrane, the selectively permeable membrane having a permeability to water vapour greater than a permeability for at least oxygen and nitrogen;
a feed gas inlet for the cabin air and a retentate gas outlet for a retentate gas; and a permeate outlet for a permeate gas;
a first fluid pathway that communicates with a first side of a membranous partition; and a second flow pathway that communicates with a second face of the membranous partition; wherein the feed gas inlet and the retentate gas outlet communicate with the first fluid pathway, and wherein the permeate outlet communicates with the second flow pathway;
flowing the cabin air along a conduit and into the first flow pathway and contacting the first face of the membranous partition with the cabin air;
contacting the second face of the membranous partition with an environment having a lower partial pressure of water vapour than the first face;
permeating the water vapour through the membranous partition from the first face to the second face at a higher normalised rate than at least oxygen and nitrogen;
removing a permeate gas comprising water vapour from the second flow pathway; flowing a retentate gas out of the first flow pathway, and recirculating the retentate air via ducting to the vehicle cabin; the retentate gas having a lower mol% of water vapour than the feed gas; and
one or both of:

supplying outside air along further ducting from an outside of the vehicle to the purge gas inlet;
applying a vacuum to the second flow pathway.

15. The method of claim 14, comprising use of the dehumidifying system of any one of claims 1 to 13.

Permeate flow

## Fig. 1
### PRIOR ART

## Fig. 2a

## Fig. 2b

## Fig. 2c

110

100

114

116  112  118

## Fig. 3

101

114

142a  130a
16a
4a
1a  3a
2a

140  14a
132
14b
2b
1b  3b
4b
142b  130b

114

120  16b

## Fig. 4
### PRIOR ART

## Fig. 5

## Fig. 6

Fig. 7

260

262

254

250

252

256

(a)

260

250

130,30

264

(b)

Fig. 8

Fig. 9

Fig. 10

Figure 11

**Figure 12**

**Figure 13**

Figure 14 (b)

Figure 15

1002
1010
1006
1004
Upper Fixture
Block
M
Membrane
Sample
Lower Fixture
1008 Block
1000

(a)

2010
586
1004
590
2004
(b)

682
684
190
(c)

Figure 16

Fig. 17

Figure 14(a)

Fig. 18

Fig. 19

Fig. 20

Fig. 21

Fig. 22

cabin (eg, ~4 m3)

S_w
moisture
generation
(70 g/hr per
passenger)

C_recirc (%RH)

membrane

C_cabin (%RH)

Q_recirc (eg, 100 L/s)

vacuum
pump

Fig. 23

cabin (eg, ~4 m3)

S_w
moisture
generation
(70 g/hr per
passenger)

C_recirc (%RH)

membrane

sweep
stream

C_cabin (%RH)

Q_recirc (eg, 100 L/s)

vacuum
pump

Fig. 24

cabin (eg, ~4 m3)

S_w
moisture
generation
(70 g/hr per
passenger)

C_recirc (%RH)

membrane

C_cabin (%RH)

Q_recirc (eg, 100 L/s)

outside
air

## Fig. 25

vacuum
pump

— with dehumidification — without dehumidification

## Fig. 26

— with dehumidification — without dehumidification

## Fig. 27

**Figure 28**

**Figure 29**

Figure 30

Figure 31

Figure 32

Figure 33

Figure 34

Europäisches Patentamt

European Patent Office

Office européen des brevets

## EUROPEAN SEARCH REPORT

**Application Number**

EP 24 19 9788

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2022 076664 A (NISSAN MOTOR; RENAULT SAS) 20 May 2022 (2022-05-20) | 1,14,15 | INV.<br>B01D69/12 |
| Y | * paragraph [0049] - paragraph [0052]; figures 11-12 * | 3-6,8,9 | B60H3/02<br>B01D53/22 |
| | ----- | | B01D53/26 |
| Y | US 2007/151447 A1 (MERKEL TIMOTHY CHARLES [US]) 5 July 2007 (2007-07-05)<br>* paragraph [0090] - paragraph [0194]; figures * | 3-6,8,9 | B60H1/00 |
| | ----- | | |
| A | JP 2000 264053 A (BOSCH AUTOMOTIVE SYSTEMS CORP) 26 September 2000 (2000-09-26)<br>* paragraph [0007] - paragraph [0025]; figures * | 1-15 | |
| | ----- | | |
| A | JP 2000 264052 A (BOSCH AUTOMOTIVE SYSTEMS CORP) 26 September 2000 (2000-09-26)<br>* paragraph [0006] - paragraph [0028]; figures * | 1-15 | |
| | ----- | | |
| A | WO 2012/151429 A1 (UNIV MISSISSIPPI [US]; SCOVAZZO PAUL [US]; SCOVAZZO ANTHONY J [US]) 8 November 2012 (2012-11-08)<br>* paragraph [0055] - paragraph [0141]; figures * | 1-15 | **TECHNICAL FIELDS SEARCHED (IPC)**<br><br>B01D<br>B60H<br>F24F |
| | ----- | | |

The present search report has been drawn up for all claims

| Place of search | Date of completion of the search | Examiner |
|---|---|---|
| Munich | 23 January 2025 | Endrizzi, Silvio |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                      

& : member of the same patent family, corresponding document

EPO FORM 1503 03.82 (P04C01)

2

## ANNEX TO THE EUROPEAN SEARCH REPORT
## ON EUROPEAN PATENT APPLICATION NO.

EP 24 19 9788

This annex lists the patent family members relating to the patent documents cited in the above-mentioned European search report.
The members are as contained in the European Patent Office EDP file on
The European Patent Office is in no way liable for these particulars which are merely given for the purpose of information.

23-01-2025

| Patent document cited in search report | | Publication date | Patent family member(s) | | Publication date |
|---|---|---|---|---|---|
| JP 2022076664 | A | 20-05-2022 | NONE | | |
| US 2007151447 | A1 | 05-07-2007 | NONE | | |
| JP 2000264053 | A | 26-09-2000 | NONE | | |
| JP 2000264052 | A | 26-09-2000 | NONE | | |
| WO 2012151429 | A1 | 08-11-2012 | US | 2014157985 A1 | 12-06-2014 |
| | | | WO | 2012151429 A1 | 08-11-2012 |

For more details about this annex : see Official Journal of the European Patent Office, No. 12/82

**EP 4 523 781 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022076664 A
- US 3953566 A
- EP 3385346 A
- US 2016032044 A
- US 2005003011 A, Sridharan
- US 20210332202 A
- US 5248461 A
- US 4873034 A
- US 5051183 A
- US 6566012 B

**Non-patent literature cited in the description**

- **BHULLAR, SUKHWINDER K.** Three decades of auxetic polymers: a review. *e-Polymers*, 2015, vol. 15 (4), 205-215
- **LIU** ; **HU**. A review on auxetic structures and polymeric materials. *Scientific Research and Essays*, 18 May 2010, vol. 5 (10), 1052-1063
- **CLARIDGE et al.** *Int. J. Refrig.*, 2019, vol. 101, 211-217

55